# EUROPEAN PATENT SPECIFICATION

(11) **EP 3 745 646 B1**
(45) Date of publication and mention of the grant of the patent: **21.08.2024**
(21) Application number: 19753903.4
(22) Date of filing: 14.02.2019
(51) Int. Cl.: H04W 76/12, H04W 28/02, H04W 72/04, H04L 41/0803

(54) **TRANSMISSION METHOD AND NETWORK DEVICE**
ÜBERTRAGUNGSVERFAHREN UND NETZWERKVORRICHTUNG
PROCÉDÉ DE TRANSMISSION ET DISPOSITIF DE RÉSEAU

(30) Priority: 14.02.2018 CN 201810152183
(43) Date of publication of application: 02.12.2020
(73) Proprietor: Huawei Technologies Co., Ltd., Longgang Shenzhen, Guangdong 518129 (CN)
(72) Inventor: SHI, Xiaoli, Shenzhen, Guangdong 518129 (CN); LUO, Haiyan, Shenzhen, Guangdong 518129 (CN); PENG, Wenjie, Shenzhen, Guangdong 518129 (CN)
(74) Representative: Epping - Hermann - Fischer
(86) International application number: PCT/CN2019/075027
(87) International publication number: WO 2019/158100

(56) References cited:
- CN-A- 106 162 730
- "3rd Generation Partnership Project; Technical Specification Group Radio Access Network; Study on new radio access technology: Radio access architecture and interfaces (Release 14)", 3GPP STANDARD ; TECHNICAL REPORT ; 3GPP TR 38.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 3 April 2017 (2017-04-03), pages 1 - 91, XP051298041
- "3rd Generation Partnership Project; Technical Specification Group Radio Access Network; NG-RAN; Architecture description (Release 15)", 14 May 2017 (2017-05-14), XP051276465, Retrieved from the Internet <URL:http://www.3gpp.org/ftp/Meetings_3GPP_SYNC/RAN3/Docs/> [retrieved on 20170514]
- ANONYMOUS: "3rd Generation Partnership Project; Technical Specification Group Radio Access Network; Study of separation of NR Control Plane (CP) and User Plane (UP) for split option 2; (Release 15)", 3GPP STANDARD; TECHNICAL REPORT; 3GPP TR 38.806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.0.0, 31 December 2017 (2017-12-31), pages 1 - 22, XP051392782
- SAMSUNG ET AL.: "Discussions on CU -Initiated UE Context Modification Procedure over F1", 3GPP TSG-RAN WG3 MEETING #97BIS R3-174616, 17 November 2017 (2017-11-17), XP051373197
- ERICSSON ET AL.: "UE Context Setup over the Fl", 3GPP TSG RAN WG3 MEETING #98 TDOC R3-174883, 3 December 2017 (2017-12-03), XP051364080

## Description

### TECHNICAL FIELD

This application relates to the communications field, and more specifically, to a transmission method and a network device.

### BACKGROUND

In a new access technology such as a 5G (New Radio, NR) technology, a base station may include a centralized unit (Centralized Unit, CU) and a distributed unit (Distributed Unit, DU). To be specific, functions of a base station in an original access network are split, some functions of the base station are deployed in one CU, and remaining functions are deployed in a plurality of DUs. A plurality of DUs share one CU, so that costs can be reduced, and network extension can be easily performed.

For data of some bearers, data offloaded from a user plane of a master base station is directly sent to a DU of a secondary base station, and a destination address of downlink data transmission is assigned by the DU of the secondary base station. Currently, interfaces are not distinguished for downlink addresses assigned by the DU of the secondary base station. If a network segment of an X2 interface (or an Xn interface) between the master base station and a DU of the secondary base station is different from a network segment of an F 1 interface between a CU of the secondary base station and the DU of the secondary base station, and an address assigned by the DU of the secondary base station belongs to the F1 network segment, the master base station cannot transmit downlink data of some bearers to the DU of the secondary base station by using the address.

3GPP: "3rd Generation Partnership Project; Technical Specification Group Radio Access Network; Study on new radio access technology: Radio access architecture and interfaces (Release 14)", 3 April 2017, provides a study of Radio Access Architecture and interface aspects. In chapter 5 several deployment scenarios are disclosed. In Chapter 7 RAN architecture options and interface aspects are discussed. Chapter 10 focusses on radio access network procedures.

3GPP: "3rd Generation Partnership Project; Technical Specification Group Radio Access Network; NG-RAN; Architecture description (Release 15)", 14 May 2017, provides a study of the overall architecture of the E-UTRAN, including internal interfaces and assumptions on the radio, S 1 and X2 interfaces. In Chapter 6 the NG-RAN architecture is discussed.

3GPP: "3rd Generation Partnership Project; Technical Specification Group Radio Access Network; Study of separation of NR Control Plane (CP) and User Plane (UP) for split option 2; (Release 15)", 31 December 2017, discloses agreements that arise from the study of control plane (CP) and user plane (UP) separation in New Radio. Chapter 5 focusses on interface functions and procedures. Chapter 6 provides scenarios and assessment results on CP-UP separation.

### SUMMARY

The invention is defined in the claims.

This application provides a transmission method and a network device. A second network node assigns a downlink address, so that a third network node or a core network node can directly transmit data with the second network node.

### BRIEF DESCRIPTION OF DRAWINGS

FIG. 1 is a schematic diagram of an application scenario of a technical solution according to an embodiment of this application;
FIG. 2 is a schematic diagram of another application scenario of a technical solution according to an embodiment of this application;
FIG. 3 is a schematic diagram of still another application scenario of a technical solution according to an embodiment of this application;
FIG. 4 is a schematic diagram of still another application scenario of a technical solution according to an embodiment of this application;
FIG. 5 is a schematic diagram of still another application scenario of a technical solution according to an embodiment of this application;
FIG. 6 is a schematic diagram of still another application scenario of a technical solution according to an embodiment of this application;
FIG. 7 is a schematic diagram of still another application scenario of a technical solution according to an embodiment of this application;
FIG. 8 is a schematic diagram of still another application scenario of a technical solution according to an embodiment of this application;
FIG. 9 is a schematic diagram of still another application scenario of a technical solution according to an embodiment of this application;
FIG. 10 is a schematic diagram of still another application scenario of a technical solution according to an embodiment of this application;
FIG. 11 is a schematic flowchart of a transmission method according to an embodiment of this application;
FIG. 12 is another schematic flowchart of a transmission method according to an embodiment of this application;
FIG. 13 is still another schematic flowchart of a transmission method according to an embodiment of this application;
FIG. 14 is still another schematic flowchart of a transmission method according to an embodiment of this application;
FIG. 15 is still another schematic flowchart of a transmission method according to an embodiment of this application;
FIG. 16 is still another schematic flowchart of a transmission method according to an embodiment of this application;
FIG. 17 is still another schematic flowchart of a transmission method according to an embodiment of this application;
FIG. 18 is a schematic block diagram of a network device according to an embodiment of this application;
FIG. 19 is another schematic block diagram of a network device according to an embodiment of this application;
FIG. 20 is still another schematic block diagram of a network device according to an embodiment of this application;
FIG. 21 is still another schematic block diagram of a network device according to an embodiment of this application;
FIG. 22 is still another schematic block diagram of a network device according to an embodiment of this application;
FIG. 23 is still another schematic block diagram of a network device according to an embodiment of this application;
FIG. 24 is still another schematic block diagram of a network device according to an embodiment of this application;
FIG. 25 is still another schematic block diagram of a network device according to an embodiment of this application;
FIG. 26 is still another schematic block diagram of a network device according to an embodiment of this application;
FIG. 27 is still another schematic block diagram of a network device according to an embodiment of this application; and
FIG. 28 is still another schematic block diagram of a network device according to an embodiment of this application.

### DESCRIPTION OF EMBODIMENTS

The following describes technical solutions of this application with reference to the accompanying drawings.

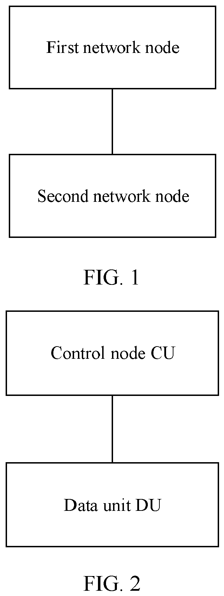

Embodiments of this application are applicable to various forms of systems in which some functions of a network device are separated. FIG. 1 is a schematic diagram of an application scenario of a technical solution according to an embodiment of this application. As shown in FIG. 1, some functions of a network device are separated into a first network node and a second network node.

Specifically, FIG. 2 is a schematic diagram of another application scenario of a technical solution according to an embodiment of this application. As shown in FIG. 2, CU-DU separation is introduced in a CRAN architecture. A CU may correspond to the first network node in FIG. 1, and a DU corresponds to the second network node in FIG. 1.

It should be understood that the first network node and the second network node may be two physically or logically separate modules in an entire network architecture, or may be two completely independent logical network elements.

It should be further understood that control plane and user plane separation may be performed for the first network node, to form a user plane of the first network node and a control plane of the first network node.

The CU has radio resource control (Radio Resource Control, RRC) functions or some RRC control functions, and includes all or some protocol layer functions of an existing base station, for example, including only the RRC functions or some of the RRC functions, or including the RRC functions or service data adaptation protocol (Service Data Adaptation Protocol, SDAP) layer functions, or including the RRC functions/packet data convergence protocol (Packet Data Convergence Protocol, PDCP) layer functions, or including the RRC functions/PDCP layer functions and some radio link control (Radio Link Control, RLC) protocol layer functions, or including the RRC functions/PDCP/media access control (Media Access Control, MAC) layer functions and even some or all physical layer PHY functions. There may be any other possibilities.

The DU has all or some protocol layer functions of an existing base station, namely, some RRC/SDAP/PDCP/RLC/MAC/PHY protocol layer function units, for example, including some RRC functions and PDCP/RLC/MAC/PHY protocol layer functions, or including PDCP/RLC/MAC/PHY protocol layer functions, or including RLC/MAC/PHY protocol layer functions, or including some RLC/MAC/PHY functions, or including only all or some PHY functions. It should be noted that the protocol layer functions mentioned herein may change, and all changes fall within the protection scope of this application.

It should be understood that in this embodiment of this application, different protocol layers may be separately deployed on the first network node and the second network node. A possible implementation is: deploying at least the first protocol layer and the second protocol layer on the first network node, and deploying at least the third protocol layer, the fourth protocol layer, and the fifth protocol layer on the second network node.

For example, the first protocol layer may be an RRC layer, the second protocol layer may be a PDCP layer, the third protocol layer may be an RLC layer, the fourth protocol layer may be a MAC layer, and the fifth protocol layer may be a PHY layer.

It should be understood that the first protocol layer, the second protocol layer, the third protocol layer, the fourth protocol layer, and the fifth protocol layer illustrated above are merely used for example description, and shall not constitute any limitation on this application. The first protocol layer and the second protocol layer may alternatively be other protocol layers defined in an existing protocol (for example, an LTE protocol) or a future protocol. This is not specifically limited in this application.

For another example, in a 5G network, a new technical progress is also achieved for a new relay node. For example, a protocol stack architecture including only a layer 2 (for example, including a radio link control (radio link control, RLC) layer and a MAC layer) and a layer 1 (for example, including a PHY layer) is deployed on a relay node, and none of protocol stack functions above the layer 2, for example, none of RRC layer functions, is deployed. Therefore, data or signaling generated by a donor base station needs to be forwarded to a terminal device by the relay node.

It should be understood that the first network node in this embodiment of this application may correspond to the DU in the CU-DU architecture, or may correspond to the relay node. The second network node may correspond to the CU in the CU-DU architecture, or may correspond to the donor base station. Alternatively, the CU and the DU correspond to the donor base station, and transmission between the DU and UE is performed by using one or more relay nodes. A previous-hop relay node of the UE corresponds to the first network node.

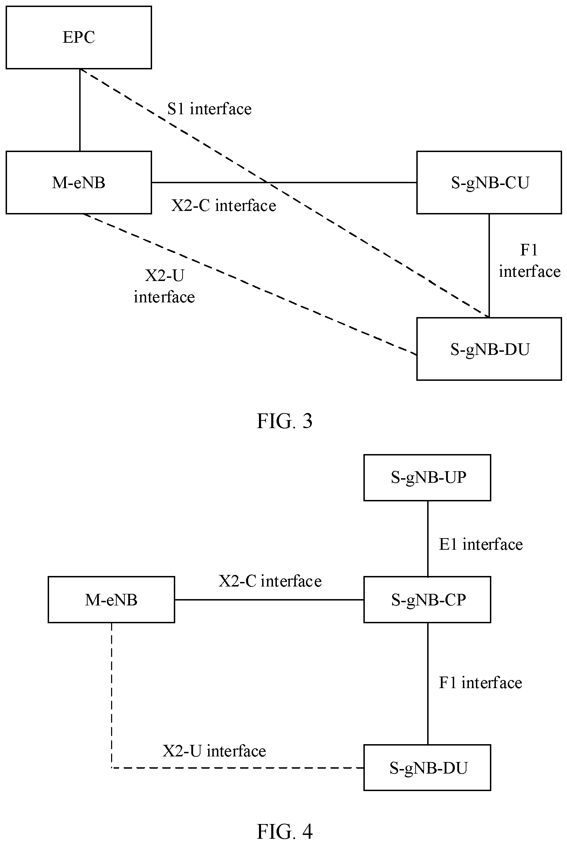

FIG. 3 is a schematic diagram of still another application scenario of a technical solution according to an embodiment of this application. As shown in FIG. 3, for a master-cell split bearer (Master Cell Group Split Bearer, MCG Split Bearer) or some other bearers, a master base station (Master Evolutional Node B, M-eNB) is allowed to directly communicate with a DU (S-gNB-DU) of a secondary base station. That is, the master base station and the secondary base station have user plane interfaces, and may perform user-plane data transmission.

It should be understood that the master base station in FIG. 3 may be an evolved NodeB eNB (master eNB, M-eNB) in LTE, or may be a gNB (master gNB, M-gNB) in NR. If the master base station is an M-eNB, and the secondary base station is an S-gNB, an interface between the master base station and the secondary base station is an X2 interface. If the master base station is an M-gNB, and the secondary base station is an S-gNB, an interface between the master base station and the secondary base station is an Xn interface. The interface may have another name. This is not limited in this application.

It should be further understood that, if the master base station is an M-eNB, the secondary base station is an S-gNB, and the secondary base station supports a centralized unit (central Unit, CU)-distributed unit (Distributed Unit, DU) separation architecture, when the master base station is an LTE eNB and the secondary base station is an NR gNB or an LTE eNB, or when the master base station is an NR gNB and the secondary base station is an LTE eNB, an interface between the master base station and a CU (gNB-CU) of the secondary base station is an X2 control plane (X2-C) interface, and an interface between the master base station and the DU (gNB-DU) of the secondary base station is an X2 user plane (X2-U) interface. When the master base station is an NR gNB, and the secondary base station is also an NR gNB, an interface between the master base station and the CU (gNB-CU) of the secondary base station is an Xn control plane (Xn-C) interface, and an interface between the master base station and the DU (gNB-DU) of the secondary base station is an Xn user plane (Xn-U) interface.

It should be further understood that the secondary base station in FIG. 3 may be a gNodeB gNB (secondary gNB, S-gNB) in NR. Correspondingly, when the secondary base station supports the CU-DU architecture, an interface between a corresponding S-gNB-DU and S-gNB-CU is an F1 interface. The secondary base station may be an evolved NodeB eNB (secondary eNB, S-eNB) in LTE. Correspondingly, when the secondary base station supports the CU-DU architecture, an interface between a corresponding S-eNB-DU and S-eNB-CU is a V1 interface.

It should be further understood that a core network may be an LTE core network (Evolved Packet Core, EPC), including a mobility management entity (Mobility Management Entity, MME) and a serving gateway (Serving Gateway, SGW), or may be an NR core network (5GC, 5G core), including a user plane function (User Plane Function, UPF) entity and an access and mobility management (Access and Mobility Management Function, AMF) entity. An interface between the LTE core network and the DU of the secondary base station is an S1 user plane (S1-U) interface, and an interface between the NR core network and the DU of the secondary base station is an NG user plane (NG-U) interface.

FIG. 4 is a schematic diagram of still another application scenario of a technical solution according to an embodiment of this application. As shown in FIG. 4, in an architecture in which a secondary base station supports separation between a control plane (Control Plane, CP) and a user plane (User Plane, UP) of a CU, when the secondary base station is an NR gNB, the S-gNB-CU of the secondary base station may be separated into an S-gNB-CP and an S-gNB-UP. An interface between the S-gNB-CP and the S-gNB-UP is an E1 interface, an interface between the S-gNB-CU-CP and an S-gNB-DU is an F1 control panel (F1-C) interface, and an interface between the S-gNB-CU-UP and the S-gNB-DU is an F1 user plane (F 1-U) interface. When the secondary base station is an LTE eNB, the S-eNB-CU of the secondary base station may be separated into an S-eNB-CP and an S-eNB-UP. An interface between the S-eNB-CP and the S-eNB-UP is an E1 interface, an interface between the S-eNB-CU-CP and an S-eNB-DU is a V1 control panel (V1-C) interface, and an interface between the S-eNB-CU-UP and the S-eNB-DU is a V1 user plane (V1-U) interface.

It should be further understood that the foregoing interface names or the node names may be other names. This is not limited in this application.

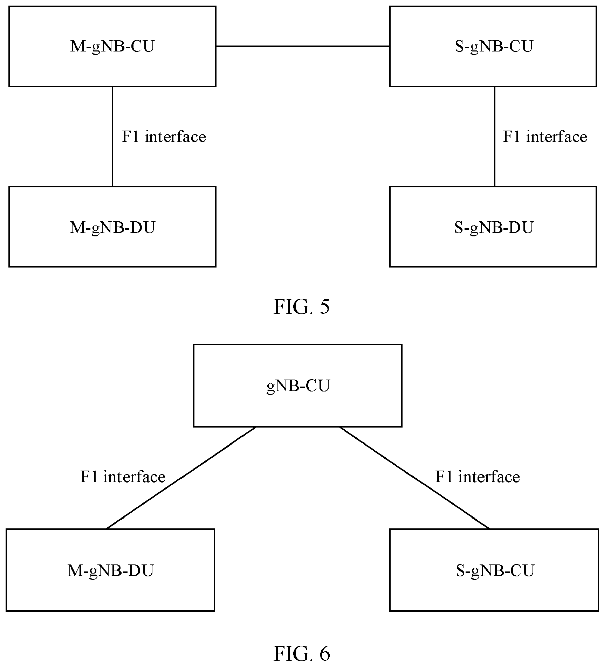

FIG. 5 is a schematic diagram of still another application scenario of a technical solution according to an embodiment of this application. As shown in FIG. 5, a master base station supports a system of CU-DU architecture system, and a secondary base station also supports a CU-DU architecture system.

FIG. 6 is a schematic diagram of still another application scenario of a technical solution according to an embodiment of this application. As shown in FIG. 6, a master base station and a secondary base station support a one-CU multi-DU architecture system.

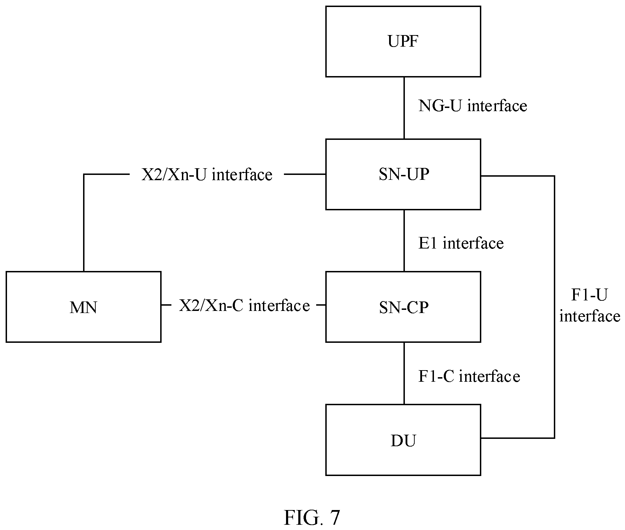

FIG. 7 is a schematic diagram of still another application scenario of a technical solution according to an embodiment of this application. As shown in FIG. 7, a secondary base station supports a CP-UP architecture. A master base station, namely, an MN (Master node) in FIG. 7, may be an eNB in LTE or a gNB in NR, and the secondary base station, namely, an SN (Secondary node) in FIG. 7, is a CU-UP in LTE or a CU-UP in NR. Correspondingly, an interface between the CP and the UP is an E1 interface, an interface between the master base station and the secondary base station may be an X2 interface or an Xn interface, and the UPF (User Plane Function, UPF) is in a core network. It should be further understood that the core network may alternatively be an LTE core network.

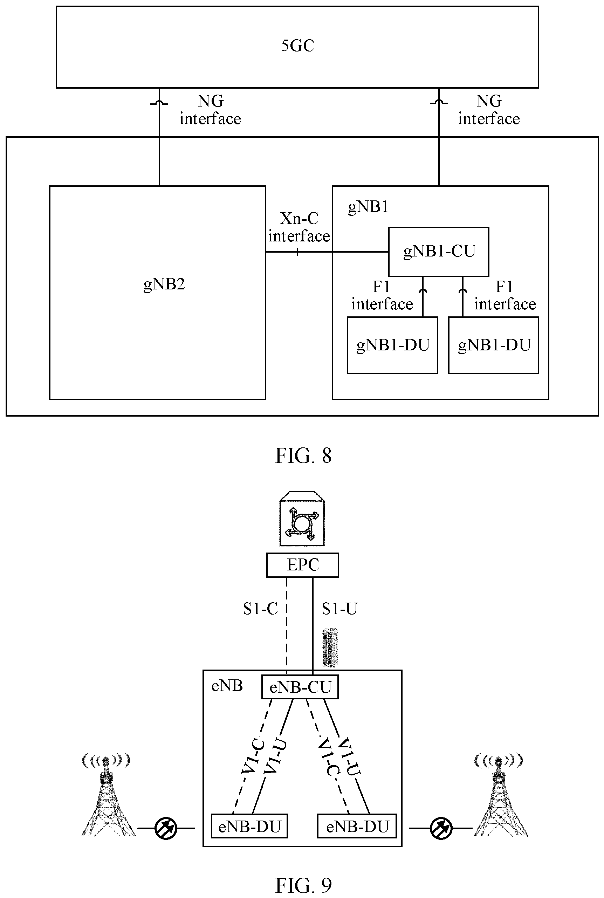

FIG. 8 is a schematic diagram of still another application scenario of a technical solution according to an embodiment of this application. As shown in FIG. 8, the technical solution in this embodiment of this application is applicable to an NR CU-DU architecture system. In the NR CU-DU system architecture, an interface between a CU and a DU is an F1 interface, an interface between a gNodeB 1 (gNB1) and a gNodeB 2 (gNB2) is an Xn interface, and an interface between a gNodeB and a core network (5GC) is an NG interface.

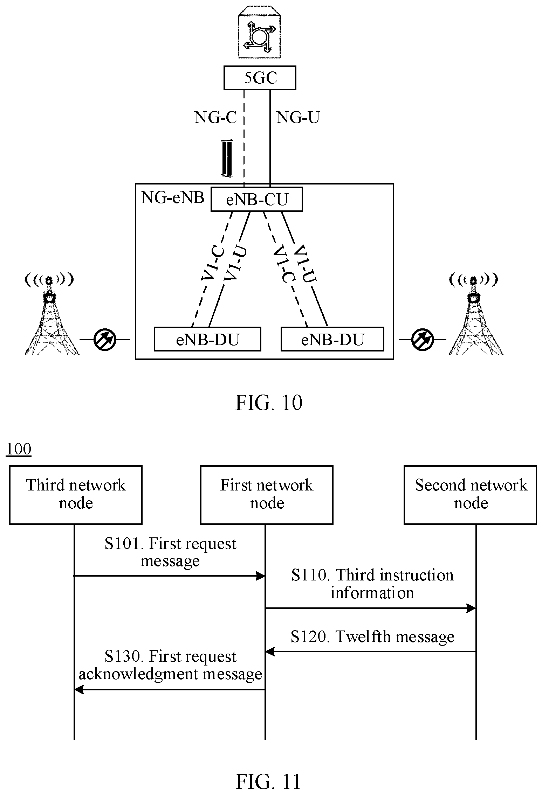

FIG. 9 and FIG. 10 are schematic diagrams of still another application scenario of a technical solution according to an embodiment of this application. As shown in FIG. 9 and FIG. 10, the technical solution in this embodiment of this application is applicable to an LTE CU-DU architecture system. A difference lies in that an interface between a CU and a DU is a V1 interface, where the V1 interface is similar to an F1 interface. An interface between evolved NodeBs (eNB) is an X2 interface. The CU may be connected to an evolved packet core EPC, or may be connected to an NR core network 5GC.

It should be understood that the 3rd Generation Partnership Project (3rd Generation Partnership Project, 3GPP) currently names an interface between a CU and a DU as F 1. The F1 interface includes a control plane (Control Plane, CP) interface and a user plane (User Plane, UP) interface. A transport layer protocol of the control plane is the stream control transmission protocol (Stream Control Transmission Protocol, SCTP), and a transmitted application layer message is an F1AP (Application Protocol) message. A transport layer protocol of the user plane is the GPRS tunneling protocol-user plane (GPRS Tunneling Protocol-User plane, GTP-U).

It should be understood that, the technical solutions in the embodiments of this application may be applied to various communications systems, such as a global system for mobile communications (Global System of Mobile Communications, GSM), a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a future 5th generation (5th-Generation, 5G) communications system, and a CRAN communications system. It should be further understood that the network device in the embodiments of this application may be a device configured to communicate with a terminal device. For example, the network device may be a combination of a base transceiver station (Base Transceiver Station, BTS) and a base station controller (Base Station Controller, BSC) in a GSM system or a CDMA system, may be a combination of a NodeB (NodeB, NB) and a radio network controller (Radio Network Controller, RNC) in a WCDMA system, or may be an evolved NodeB (Evolutional NodeB, eNB or eNodeB) in an LTE system. Alternatively, the network device may be a relay station, an access point, a vehicle-mounted device, a wearable device, and an access network device in a future 5G network, such as a next-generation base station or an access network device in a future evolved public land mobile network (Public Land Mobile Network, PLMN).

Specifically, in a UMTS system in a third generation mobile communications technology (3rd-Generation, 3G), there is a scenario in which a radio network control node is separated from a base station. In an LTE system, there are: a scenario in which a baseband module is separated from a radio frequency module, namely, a remote radio scenario; a data center (Data Center, DC) scenario, in which interconnection between two different networks is required; a macro/small cell scenario, in which there is an interface for interconnection between a macro cell and a small cell; a dual-connectivity (Dual Connectivity) scenario, in which a terminal device may transmit data with two or more base stations; and an LTE and Wi-Fi aggregation (LTE-Wi-Fi aggregation, LWA) scenario. In a 5G system, there are: various non-cell (non-cell) scenarios (where a terminal may be randomly handed over between cells, and there is no explicit boundary between the cells), in which one control node is connected to all cells, or transmission nodes are connected to a cell; a CRAN scenario, including a BBU splitting scenario; a CRAN virtualization scenario, in which some functions of a BBU are centrally deployed and virtualized, the other functions are separately deployed, and physically, the two parts may be separately deployed. It should be understood that scenarios in which different systems/standards coexist fall within the applicable scope of this application.

This application describes the embodiments with reference to a terminal device. The terminal device may also be referred to user equipment (User Equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a PLMN, or the like.

Before the embodiments of this application are described, several concepts related to the embodiments of this application are first briefly described.

Tunnel endpoint: A tunnel is a GTP (GPRS tunneling protocol) tunnel. The GTP tunnel is used to support communication between two network nodes based on a GTP protocol, that is, data transmission between two network nodes. In this case, a tunnel endpoint is used to identify a user to which the tunnel belongs. The tunnel endpoint is assigned by a network node. Each address exchanged between network devices (for example, base stations) is a tunnel endpoint (GPRS Tunnel Protocol Tunnel Endpoint, GTP tunnel endpoint), and the tunnel endpoint includes two information elements (Information Element, IE) shown in Table 1.

**Table 1 Two information elements in a tunnel endpoint**

| IE/Group Name | Presence |
|---|---|
| Transport Layer Address | IP address transmitted on a user plane |
| GTP TEID | GTP tunnel endpoint identifier, which is a tunnel endpoint identifier transmitted on the user plane |

The GTP tunnel endpoint in the embodiments of this application is explained as follows: X2/Xn UL GTP tunnel endpoint: a tunnel endpoint allocated by a network device to an X2/Xn transmission bearer, used to transmit uplink data (including protocol data unit PDUs), and used to indicate a destination address of uplink data transmission on an X2/Xn interface.

X2/Xn DL GTP tunnel endpoint: a tunnel endpoint allocated by a network device to the X2/Xn transmission bearer, used to transmit downlink data (including PDUs), and used to indicate a destination address of downlink data transmission on the X2/Xn interface.

S1/NG UL GTP tunnel endpoint: a tunnel endpoint allocated by a core network to an S1/NG transmission bearer, used to transmit uplink data (including PDUs), and used to indicate a destination address of uplink data transmission on an S1/NG interface.

S 1/NG DL GTP tunnel endpoint: a tunnel endpoint of a network device for the S 1/NG transmission bearer, used to transmit downlink data (including PDUs), and used to indicate a destination address of downlink data transmission on the S1/NG interface.

F1 UL GTP tunnel endpoint: a tunnel endpoint of a network device for an F1 transmission bearer, used to transmit uplink data (including PDUs), and used to indicate a destination address of uplink data transmission on an F1 interface.

F1 DL GTP tunnel endpoint: a tunnel endpoint of a network device for the F1 transmission bearer, used to transmit downlink data (including PDUs), and used to indicate a destination address of downlink data transmission on the F1 interface.

It should be noted that the foregoing tunnel endpoints may be in a one-to-one correspondence with bearers, or may be in a one-to-one correspondence with sessions, or may be in a one-to-one correspondence with quality of service (quality of service, QoS) flows, or may be tunnel endpoints assigned to a specific bearer, or may be tunnel endpoints assigned to a specific session, or may be tunnel endpoints assigned to a specific QoS flow. This is not limited in this application.

It should be understood that the embodiments of this application are mainly specific to traffic charging, power distribution, and the like of various bearer types when the secondary base station supports CU-DU and CP-UP system architectures, and are not limited to LTE and NR.

It should be further understood that the technical solutions in the embodiments of this application may be further extended to a multi-hop relay scenario, that is, a scenario in which a DU may be a relay node, or to a scenario in which transmission is performed between a DU and a terminal device by using a relay device.

FIG. 11 is a schematic flowchart of a transmission method 100 according to an embodiment of this application. As shown in FIG. 10, a first network node in the transmission method 100 may be the first network node in FIG. 1, the CU in FIG. 2, or the S-gNB-CU in FIG. 3, and a second network node in the transmission method 100 may be the second network node in FIG. 1, the CU in FIG. 2, or the S-gNB-DU in FIG. 3. The transmission method 100 includes the following steps.

S110. The first network node sends third indication information to the second network node through a fourth interface, and the second network node receives, through the fourth interface, the third indication information sent by the first network node, where the third indication information is used to instruct to trigger the second network node to assign a downlink tunnel endpoint of a fifth interface and/or a downlink tunnel endpoint of a sixth interface, the fifth interface is an interface between the second network node and a third network node, the sixth interface is an interface between the second network node and a core network node, and the fourth interface, the fifth interface, and the sixth interface are different interfaces.

Specifically, when determining that a network segment of the fifth interface is different from a network segment of the sixth interface, the first network node may send the third indication information to the second network node, where the third indication information is used to trigger the second network node to assign the downlink tunnel endpoint of the fifth interface and/or the downlink tunnel endpoint of the sixth interface, the fifth interface is an interface between the second network node and the third network node, the sixth interface is an interface between the second network node and the core network node, and the fourth interface, the fifth interface, and the sixth interface are different interfaces.

Optionally, the third indication information is used to instruct to trigger the second network node to assign a downlink tunnel endpoint of a fifth interface and/or a downlink tunnel endpoint of a sixth interface that are of a specific bearer, a specific session, and/or a specific QoS flow.

It should be understood that, the third indication information may be carried in an F1 AP message (for example, a UE context setup request, a UE context modification request, another existing F 1 AP message, or a new message), and are sent by the first network node to the second network node through the fourth interface (for example, an F1 interface).

Optionally, the tunnel endpoint includes at least one of an IP address transmitted on a user plane and a tunnel address (GTP TEID) transmitted on the user plane.

For example, as shown in FIG. 3, the first network node is an S-gNB-CU, the second network node is an S-gNB-DU, the third network node is an M-eNB, the fourth interface is an F 1 interface, the fifth interface is an X2-U interface, and the sixth interface is an S1-U interface. The S-gNB-CU sends a UE context setup request message to the S-gNB-DU, where the UE context setup request message includes the third indication information, and the third indication information is used to instruct the S-gNB-DU to assign an X2 DL GTP tunnel endpoint and/or an S 1 DL GTP tunnel endpoint. Specifically, the S-gNB-CU may send the message when the S-gNB-CU determines that a network segment of the F1 interface is inconsistent with a network segment of the X2 interface or in another manner. This is not limited in this application.

It should be understood that the third indication information may be carried in an F1 AP message (for example, a UE context setup request message, a UE context modification request message, another existing F1 AP message, or a new message, which is not limited in this application), and are sent by the first network node to the second network node.

Optionally, the third indication information includes an uplink tunnel endpoint of the fifth interface and/or an uplink tunnel endpoint of the sixth interface.

Specifically, the third indication information may carry the uplink tunnel endpoint of the fifth interface and/or the uplink tunnel endpoint of the sixth interface, where the uplink tunnel endpoint of the fifth interface and/or the uplink tunnel endpoint of the sixth interface may be implicitly used to instruct the second network node to assign the downlink tunnel endpoint of the fifth interface and/or the downlink tunnel endpoint of the sixth interface.

For example, as shown in FIG. 3, the S-gNB-CU adds an X2 UL GTP tunnel endpoint and/or an S1 UL GTP tunnel endpoint to an F1 AP message such as a UE context setup request message. After receiving the UE context setup request message, the S-gNB-DU adds an X2 DL GTP tunnel endpoint and/or an S1 DL GTP tunnel endpoint to an F1 AP message such as a UE context setup response message sent to the S-gNB-CU. The F1 AP message may alternatively be a UE context modification request message or another existing message. This is not limited in this application. Optionally, the third indication information includes a mapping relationship between a first bearer and the fifth interface and/or a mapping relationship between a second bearer and the sixth interface.

Specifically, the third indication information carries a mapping relationship between a bearer and an interface. After receiving the third indication information, the second network node may add, based on the mapping relationship between a bearer and an interface, the downlink tunnel endpoint of the fifth interface for the first bearer and/or the uplink tunnel endpoint of the sixth interface for the second bearer to a message fed back to the first network node. The message that is fed back may be a UE context setup response message, a UE context modification response message, another existing F1 AP message, or a new message. This is not limited in this application.

For example, as shown in FIG. 3, the S-gNB-CU adds a mapping relationship between an X2 interface and the first bearer (for example, a DRB 1) and/or a mapping relationship between an S1 interface and the first bearer (for example, a DRB 2) to an F1 AP message such as a UE context setup request message, and the S-gNB-DU adds an X2 DL GTP tunnel endpoint and/or an S1 DL GTP tunnel endpoint to the F1 AP message, for example, the UE context setup response message, sent to the S-gNB-CU.

Optionally, the third indication information includes type information of a first bearer. For example, if the first bearer is a master cell split bearer (MCG Split Bearer), the third indication information is used to instruct to trigger the second network node to assign the downlink tunnel endpoint of the fifth interface. For another example, if the first bearer is a secondary cell bearer (SCG Bearer), the third indication information is used to instruct to trigger the second network node to assign the downlink tunnel endpoint of the sixth interface. It should be understood that content of the third indication information described above is merely an example, and this application is not limited thereto. For example, the third indication information may alternatively be a bit 0 or a bit 1. For example, if the third indication information is a bit 0, the second network node assigns a downlink tunnel address of the fifth interface after receiving the third indication information. For another example, if the third indication information is a bit 1, the second network node assigns a downlink tunnel address of the sixth interface after receiving the third indication information.

It should be further understood that the third indication information further includes configuration information of the first bearer. For example, the configuration information of the first bearer includes a bearer identifier of the first bearer and a quality of service (quality of service, QoS) parameter at a level of the first bearer. Alternatively, the configuration information of the first bearer includes at least one of a session identifier corresponding to the first bearer, a QoS flow indicator (QoS flow indicator, QFI), a mapping relationship between the first bearer and a QFI, a QFI-level QoS parameter, and a QoS parameter at a level of the first bearer.

Optionally, the first network node includes at least one of a radio resource control protocol layer function, a service data adaptation protocol layer function, and a packet data convergence protocol layer function; and/or
the second network node includes at least one of a packet data convergence protocol layer function, a radio link control protocol layer function, a media access control layer function, and a physical layer function; and/or
the third network node includes at least one of a radio resource control protocol layer function, a service data adaptation protocol layer function, a packet data convergence protocol layer function, a radio link control protocol layer function, a media access control layer function, and a physical layer function.

Optionally, a protocol stack architecture of the first network node is at least one of a radio resource control protocol layer, a service data adaptation protocol layer, and a packet data convergence protocol layer function; and/or
a protocol stack architecture of the second network node is at least one of a packet data convergence protocol layer, a radio link control protocol layer, a media access control layer, and a physical layer function.

It should be understood that, for the SCG bearer, some packet data convergence protocol layer (PDCP) functions of the first network node (the CU) need to be moved to the second network node (the DU). The PDCP functions may be encryption functions. A key derivation process of the second network node is similar to an existing process. To be specific, after deriving a key, first, the third network node (the M-eNB) sends the key to the first network node through the fifth interface (X2), and then, the first network node sends the key to the second network node by using a fourth interface (F1) message. Specifically, the F1 message may be a UE context setup request message, a UE context setup response message, another existing message, or a new message. This is not limited in this application.

Optionally, before S 110 of sending, by the first network node, third indication information to the second network node through a fourth interface, the transmission method 100 further includes the following step:
S 101. The third network node sends a first request message to the first network node, and the first network node receives the first request message sent by the third network node, where the first request message is used to request to allocate a radio resource to the first bearer.

It should be understood that the first request message may be an S-gNB addition request message, an S-gNB modification confirmation message, an S-gNB modification request message, another existing X2 AP message, or a new message. This is not limited in this application.

Specifically, the third network node determines to request a radio resource of the first bearer from the first network node. The first request message may include characteristics of the first bearer, including a bearer and/or session parameter (for example, at least one of an ERAB ID, a radio bearer identifier, a bearer-level QoS parameter, a data packet session identifier (PDU session ID), a QoS flow indicator (QoS flow indicator, QFI), a mapping relationship between a bearer and a QFI, or a QFI-level QoS parameter), and transport network layer (Transport Network Layer, TNL) address information corresponding to a bearer type.

Optionally, the third network node may provide a latest measurement result to the first network node.

Optionally, the first bearer is an MCG split bearer, and the first request message carries the uplink tunnel endpoint of the fifth interface.

For example, as shown in FIG. 3, for the MCG split bearer, the M-eNB may send an S-gNB addition request message to the S-gNB-CU, where a TNL address in the S-gNB addition request message is an X2 UL GTP tunnel endpoint, and the TNL address is used to indicate a destination address of uplink data transmission.

Optionally, the first bearer is an SCG bearer, and the first request message carries the uplink tunnel endpoint of the sixth interface.

For example, as shown in FIG. 3, for the SCG bearer, the M-eNB may send an S-gNB addition request message to the S-gNB-CU, where a TNL address in the S-gNB addition request message is an S1 UL GTP tunnel endpoint, and the TNL address is used to indicate a destination address of uplink data transmission.

Optionally, the first network node may send the third indication information to the second network node based on a type of the first bearer.

For example, if the first bearer is an MCG split bearer, the third indication information is used to instruct to trigger the second network node to assign the downlink tunnel endpoint of the fifth interface.

For another example, if the first bearer is an SCG bearer, the third indication information is used to instruct to trigger the second network node to assign the downlink tunnel endpoint of the sixth interface.

S120. The second network node sends a twelfth message to the first network node, and the first network node receives the twelfth message sent by the second network node, where the twelfth message includes the downlink tunnel endpoint of the fifth interface and/or the downlink tunnel endpoint of the sixth interface.

Optionally, the twelfth message includes the downlink tunnel endpoint of the fifth interface and/or a tunnel endpoint of the sixth interface on a specific bearer requested by the first network node.

Specifically, for an MCG split bearer, if the third indication information in S110 is used to instruct the second network node to assign the downlink tunnel endpoint of the fifth interface, the second network node assigns a downlink tunnel address of the fifth interface, or if the third indication information in S110 is used to instruct the second network node to assign a downlink tunnel endpoint to a specific bearer of the fifth interface, the second network node assigns a downlink tunnel address to the specific bearer of the fifth interface. For an SCG bearer, if the third indication information in S110 is used to instruct the second network node to assign the downlink tunnel endpoint of the sixth interface, the second network node assigns a downlink tunnel address of the sixth interface, or if the third indication information in S110 is used to instruct the second network node to assign the downlink tunnel endpoint of the sixth interface to a specific bearer, the second network node assigns a downlink tunnel address of the sixth interface to the specific bearer.

It should be understood that the twelfth message may be a UE context setup response message, a UE context modification message, another existing F1 AP message, or a new message. This is not limited in this application.

For example, as shown in FIG. 3, the S-gNB-DU sends a UE context setup response message to the S-gNB-CU, where the UE context setup response message carries an X2 DL GTP tunnel endpoint and/or an S1 DL GTP tunnel endpoint.

It should be understood that if the first network node may request, in the first request message, to assign radio resources to the MCG split bearer and the SCG bearer, the third indication information is used to instruct the second network node to assign the downlink tunnel endpoint of the fifth interface and/or a tunnel endpoint of the sixth interface.

S130. The first network node sends a first request acknowledgment message to the third network node, and the third network node receives the first request acknowledgment message sent by the first network node, where the first request acknowledgment message includes the downlink tunnel endpoint of the fifth interface and/or the downlink tunnel endpoint of the sixth interface.

It should be understood that the first request acknowledgment message may be an S-gNB addition request acknowledge message, an S-gNB modification required message, an S-gNB modification request acknowledge message, another existing X2 AP message, or a new message. This is not limited in this application.

Specifically, after receiving the twelfth message sent by the second network node, the first network node sends the first request acknowledgment message to the third network node. The first request acknowledgment message includes the downlink tunnel endpoint of the fifth interface and/or the tunnel endpoint of the sixth interface.

For example, as shown in FIG. 3, the S-gNB-CU sends an S-gNB addition request acknowledge message to the M-eNB, where the S-gNB addition request acknowledge message carries an X2 DL GTP tunnel endpoint and/or an S1 DL GTP tunnel endpoint.

It should be understood that if the S-gNB addition request acknowledge message carries the S1 DL GTP tunnel endpoint, after receiving the S-gNB addition request acknowledge message, the M-eNB further needs to send a message to a core network, where the message carries the S1 DL GTP tunnel endpoint, so that the core network sends downlink data to the S-gNB-DU. It should be noted that the tunnel endpoints may be in a one-to-one correspondence with bearers. For details, refer to existing LTE and NR technologies. For brevity, details are not described herein. According to the transmission method in this embodiment of this application, the second network node assigns the downlink tunnel address of the fifth interface and/or the downlink tunnel address of the sixth interface, so that the master base station directly transmits data with the secondary base station DU, or the core network directly transmits data with the secondary base station DU.

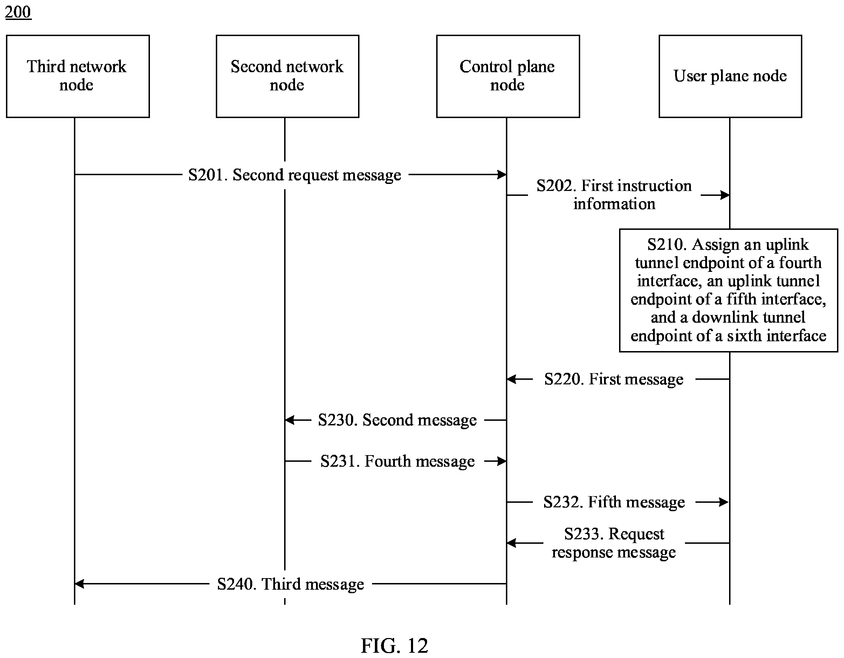

FIG. 12 is a schematic flowchart of a transmission method 200 according to an embodiment of this application. As shown in FIG. 12, a user plane node in the method 200 is the SN-UP in FIG. 7, a control plane node is the SN-CP in FIG. 7, and a second network node is the DU in FIG. 7, a third network node is the MN in FIG. 7, and a core network node is the UPF in FIG. 7. The transmission method 200 includes the following steps.

S210. The user plane node determines an uplink tunnel endpoint of a first interface, an uplink tunnel endpoint of a second interface, and a downlink tunnel endpoint of a third interface, where the first interface is an interface between the user plane node and the second network node, the second interface is an interface between the user plane node and the third network node, and the third interface is an interface between the user plane node and the core network node.

S220. The user plane node sends a first message to the control plane node, and the control plane node receives the first message sent by the user plane node, where the first message includes the uplink tunnel endpoint of the first interface, the uplink tunnel endpoint of the second interface, and the downlink tunnel endpoint of the third interface.

S230. The control plane node sends a second message to the second network node, and the second network node receives the second message sent by the control plane node, where the second message includes the uplink tunnel endpoint of the first interface.

S240. The control plane node sends a third message to the third network node, and the third network node receives the third message sent by the control plane node, where the third message includes the uplink tunnel endpoint of the second interface and the downlink tunnel endpoint of the third interface.

It should be understood that there is no actual sequence between S230 and S240.

It should be understood that the first message may be an E1 AP message, such as a UE bearer setup response message, a UE bearer modification response message, a UE bearer modification required message, another existing E1 AP message, or a new message. This is not limited in this application. It should be understood that the second message may be an F1 AP message, such as a UE context setup request message, a UE context modification request message, a UE context modification confirmation message, another existing F1 AP message, or a new message. This is not limited in this application.

It should be understood that the third message may be an X2 AP message, such as an S-gNB addition request acknowledge message, an S-gNB modification request acknowledge message, an S-gNB modification required message, another existing X2 AP message, or a new message. This is not limited in this application.

Optionally, the tunnel endpoint in S210 to S240 is a tunnel endpoint of a specific bearer, a specific session, and/or a specific QoS flow. Specifically, the user plane node determines the uplink tunnel endpoint of the first interface, the uplink tunnel endpoint of the second interface, and the downlink tunnel endpoint of the third interface that are of the specific bearer, the specific session, and/or the specific QoS flow. Optionally, the user plane node includes at least one of a radio resource control protocol layer function, a service data adaptation protocol layer function, and a packet data convergence protocol layer function; and/or
the second network node includes at least one of a packet data convergence protocol layer function, a radio link control protocol layer function, a media access control layer function, and a physical layer function; and/or
the third network node includes at least one of a radio resource control protocol layer function, a service data adaptation protocol layer function, a packet data convergence protocol layer function, a radio link control protocol layer function, a media access control layer function, and a physical layer function.

It should be understood that protocol stack architectures of the control plane node and the user plane node are the same. That is, the user plane node and the control plane node each include at least one of a radio resource control protocol layer function, a service data adaptation protocol layer function, and a packet data convergence protocol layer function, where the radio resource control protocol layer, the service data adaptation layer, and the packet data convergence protocol layer each have a user plane and a control plane.

It should be understood that the control plane node and the user plane node belong to a same system or different systems. For example, if the user plane node and the control plane node belong to a first system, the control plane node is a control plane node in the first system, the user plane node is a user plane node in the first system, and the first system may be the first network node in FIG. 1 or the CU in FIG. 2.

Specifically, the user plane node assigns the uplink tunnel endpoint of the first interface, the uplink tunnel endpoint of the second interface, and the downlink tunnel endpoint of the third interface, and adds the uplink tunnel endpoint of the first interface, the uplink tunnel endpoint of the second interface, and the downlink tunnel endpoint of the third interface to the first message to be sent to the control plane node. After receiving the first message, the control plane node sends the second message to the second network node, and sends the third message to the third network node, where the second message includes the uplink tunnel endpoint of the first interface, and the third message includes the uplink tunnel endpoint of the second interface and the downlink tunnel endpoint of the third interface.

Optionally, the uplink tunnel endpoint of the first interface, the uplink tunnel endpoint of the second interface, and the downlink tunnel endpoint of the third interface are different. Optionally, at least some of the uplink tunnel endpoint of the first interface, the uplink tunnel endpoint of the second interface, and the downlink tunnel endpoint of the third interface are the same.

It should be understood that network segments of the first interface, the second interface, and the third interface may be inconsistent (where for example, some are internal networks, and some are external networks). In this case, the uplink tunnel endpoint of the first interface, the uplink tunnel endpoint of the second interface, and the downlink tunnel endpoint of the third interface are different.

It should be further understood that if the network segments of the first interface, the second interface, and the third interface are consistent, the uplink tunnel endpoint of the first interface, the uplink tunnel endpoint of the second interface, and the downlink tunnel endpoint of the third interface are the same.

For example, as shown in FIG. 7, the first interface is an F1 interface, the second interface is an X2 interface (or an Xn interface, where the X2 interface is used as an example for description below), and the third interface is an S1 interface.

For another example, as shown in FIG. 7, the uplink tunnel endpoint of the first interface is an F1 UL GTP tunnel endpoint, a downlink tunnel endpoint of the first interface is an F1 DL GTP tunnel endpoint, the uplink tunnel endpoint of the second interface is an X2 UL GTP tunnel endpoint, a downlink tunnel endpoint of the second interface is an X2 DL GTP tunnel endpoint, an uplink tunnel address of the third interface is an S1 UL GTP tunnel endpoint, and a downlink tunnel address of the third interface is an S1 DL GTP tunnel endpoint. It should be understood that the tunnel endpoints may be in a one-to-one correspondence with bearers, sessions, and/or QoS flows. For another example, as shown in FIG. 7, the SN-UP first assigns an F1 UL GTP tunnel endpoint, an X2 UL GTP tunnel endpoint, and an S1 DL GTP tunnel endpoint. An E1 AP message (for example, a UE bearer setup response message) sent by the SN-UP to the SN-CP carries the F1 UL GTP tunnel endpoint, the X2 UL GTP tunnel endpoint, and the S1 DL GTP tunnel endpoint. After receiving the UE bearer setup response message, the SN-CP sends an F1 AP message (for example, a UE context setup request message) to the DU, where the UE context setup request message carries the F1 UL GTP tunnel endpoint. The SN-CP sends an X2 AP message (for example, an SgNB addition request ACK message) to the MN, where the SgNB addition request ACK message carries the X2 UL GTP tunnel endpoint and the S1 DL GTP tunnel endpoint. It should be understood that the tunnel endpoints may be in a one-to-one correspondence with bearers, sessions, and/or QoS flows.

Optionally, the first message further carries indication information, where the indication information is used to indicate a correspondence between a tunnel endpoint and an interface, for example, indicate, to the control plane node, that the uplink tunnel endpoint of the first interface is used for the first interface, and/or indicate, to the control plane node, that the uplink tunnel endpoint of the second interface is used for the second interface, and/or indicate, to the control plane node, that the downlink tunnel endpoint of the third interface is used for the third interface. Optionally, the third message further carries indication information, where the indication information is used to indicate a correspondence between a tunnel endpoint and an interface, for example, indicate, to the third network node, that the uplink tunnel endpoint of the second interface is used for the second interface, and/or indicate, to the third network node, that the downlink tunnel endpoint of the third interface is used for the third network node.

Optionally, if data forwarding is supported, the third message further carries a data forwarding (data forwarding) address of the X2 interface, and the second message further carries a data forwarding address of the F1 interface. The addresses may be assigned by the control plane node or the user plane node. Similarly, if the addresses are assigned by the user plane node, the addresses may be sent to the control plane node in S220 or S233.

Specifically, the data forwarding address of the X2 interface includes a downlink data forwarding address and an uplink data forwarding address (for example, a DL forwarding X2 GTP tunnel endpoint, indicating that an X2 transmission bearer is used to forward downlink data packets PDUs, and a UL forwarding X2 GTP tunnel endpoint, indicating that the X2 transmission bearer is used to forward uplink data packets PDUs). The data forwarding address of the F1 interface includes a downlink data forwarding address and an uplink data forwarding address (for example, a DL forwarding F1 GTP tunnel endpoint, indicating that an F1 transmission bearer is used to forward downlink data packets PDUs, and a UL forwarding F1 GTP tunnel endpoint, indicating that the F1 transmission bearer is used to forward uplink data packets PDUs). The forwarding address is a GTP tunnel endpoint (including a transmission IP address and a TEID). It should be noted that the data forwarding address of the X2 interface and the data forwarding address of the F1 interface may be in a one-to-one correspondence with bearers.

Optionally, if data forwarding is supported, and the data forwarding addresses are assigned by the control plane node, alternatively, the data forwarding address of the X2 interface may be carried in the E1 AP message and sent by the control plane node to the user plane node, and the data forwarding address of the F1 interface may be carried in the E1 AP message and sent by the control plane node to the user plane node. Optionally, if data forwarding is supported, and the data forwarding addresses are assigned by the control plane node, the E1 AP message sent by the control plane node to the user plane node carries indication information, where the indication information is used to indicate a correspondence between a data forwarding address and an interface.

Optionally, if data forwarding is supported, and the data forwarding addresses are assigned by the user plane node, the E1 AP message sent by the user plane node to the control plane node carries indication information, where the indication information is used to indicate a correspondence between a data forwarding address and an interface.

Optionally, if data forwarding is supported, and the data forwarding addresses are assigned by the control plane node, alternatively, the data forwarding address of the F1 interface may be carried in the F1 AP message and sent by the control plane node to the second network node, or the data forwarding address of the F1 interface may be carried in the E1 AP message and sent by the control plane node to the user plane node.

Optionally, if data forwarding is supported, and the data forwarding addresses are assigned by the user plane node, before the control plane node receives the data forwarding addresses, the control plane node sends a data forwarding instruction to the user plane node, where the data forwarding instruction is used to instruct the user plane node to forward a downlink data packet, that is, instruct the user plane node to assign a data forwarding address (for example, the data forwarding address of the X2 interface and the data forwarding address of the F1 interface) for data forwarding. Further, alternatively, the data forwarding instruction may be used to instruct the user plane node to forward a downlink data packet of a specific bearer, that is, instruct the user plane node to assign a data forwarding address of the specific bearer (for example, a data forwarding address of the X2 interface for the specific bearer and a data forwarding address of the F1 interface for the specific bearer) for data forwarding of the specific bearer.

It should be understood that the transmission method 200 is described by using an example in which a master base station is an LTE eNB (M-eNB, Master eNB), a secondary base station is a gNB-CU-CP in NR. For an architecture in which a master base station is an NR gNB and a secondary base station is an LTE CP-UP, an architecture in which a master base station is an NR gNB and a secondary base station is an NR CP-UP, or an architecture in which a master base station is an LTE eNB and a secondary base station is an LTE CP-UP, the method is also applicable. Optionally, the method 200 further includes the following steps.

S201. The third network node sends a second request message to the control plane node, and the control plane node receives the second request message sent by the third network node, where the second request message is used to request the control plane node to allocate a radio resource to a second bearer.

Optionally, a type of the second bearer is a secondary-cell split bearer (SCG split bearer). Optionally, the second request message includes the downlink tunnel endpoint of the second interface and/or the uplink tunnel endpoint of the third interface.

Optionally, the second request message includes a bearer parameter and/or a session parameter, where the bearer parameter includes at least one of a bearer identifier ERAB ID and a bearer-level QoS parameter, and the session parameter includes at least one of a session identifier, a QoS flow indicator (QoS flow indicator, QFI), a bearer identifier, a mapping relationship between a bearer and a QFI, a QFI-level QoS parameter, and a bearer-level QoS parameter.

Optionally, the second request message includes a data forwarding instruction, for example, a data forwarding instruction (for example, DL forwarding) for a specific bearer, a data forwarding instruction for a specific QoS flow (QoS flow), or a data forwarding instruction for a specific session.

Optionally, the second request message carries a latest measurement result of the third network node.

Optionally, the second request message may be a message such as a secondary base station addition request message (for example, an SgNB addition request message) or a secondary base station modification request message (for example, an SgNB modification request message), or may be another existing X2 AP message or a new message. This is not limited in this application.

For example, as shown in FIG. 7, before the SN-CP sends a first indication information to the SN-UP, the MN sends an X2 AP message (for example, an SgNB addition request message) to the SN-CP, where the SgNB addition request message carries an X2 DL GTP tunnel endpoint, an S 1 UL GTP tunnel endpoint, and at least one of an ERAB ID, an ERAB-level QoS parameter, a data packet session identifier (PDU session ID), a QoS flow indicator (QoS flow indicator, QFI), a mapping relationship between a bearer (such as an ERAB ID and a DRB ID) and a QFI, a QFI-level QoS parameter, and a bearer-level QoS parameter.

S202. The control plane node sends the first indication information to the user plane node, and the user plane node receives the first indication information from the control plane node.

The first indication information is used to indicate that a bearer type requested by the control plane node is a secondary-cell split bearer; or
the first indication information is used to instruct the user plane node to assign the uplink tunnel endpoint of the first interface, the uplink tunnel endpoint of the second interface, and the downlink tunnel endpoint of the third interface; or the first indication information includes at least one of a downlink tunnel endpoint of the first interface, a downlink tunnel endpoint of the second interface, and an uplink tunnel endpoint of the third interface; or
the first indication information is used to indicate at least one of the following: the user plane node is required to have a packet data convergence protocol layer function, the user plane node is required to have a master-cell resource configuration, or the user plane node is required to have a secondary-cell resource configuration.

It should be understood that the first indication information may indicate whether a PDCP function exists, whether an MCG configuration exists, or whether an SCG configuration exists, for example, may indicate whether a PDCP function exists (for example, a value for the PDCP function in a resource configuration of the CU-UP is set to "present" or "not present", a value for the MCG configuration in the resource configuration of the CU-CP is set to "present" or "not present", and a value for the SCG configuration in the resource configuration of the CU-UP is set to "present" or "not present").

Specifically, before the user plane node assigns the uplink tunnel endpoint of the first interface, the uplink tunnel endpoint of the second interface, and the downlink tunnel endpoint of the third interface, the control plane node may send the first indication information to the user plane node, where the first indication information may be used to explicitly or implicitly instruct the user plane node to assign the uplink tunnel endpoint of the first interface, the uplink tunnel endpoint of the second interface, and the downlink tunnel endpoint of the third interface.

Optionally, the first indication information is carried in an E1 AP message (for example, a UE bearer setup request message or a UE bearer modification request message), another existing E1 AP message, or a new message. This is not limited in this application.

Optionally, the E1 AP message (for example, the UE bearer setup request message) includes the downlink tunnel endpoint of the second interface and/or the uplink tunnel endpoint of the third interface.

Optionally, the E1 AP message includes a data forwarding instruction (for example, DL forwarding) or a data forwarding instruction for a specific bearer.

Optionally, the E1 AP message includes at least one of a security configuration, an SDAP configuration, and a PDCP configuration.

Optionally, the E1 AP message includes a bearer and/or session parameter, for example, at least one of a data packet session identifier (PDU session ID), a QoS flow indicator (QoS flow indicator, QFI), a bearer identifier (an ERAB ID, a DRBID, or the like), a mapping relationship between a bearer and a QFI, a QFI-level QoS parameter, and a bearer-level QoS parameter.

Optionally, the E1 AP message includes a QFI-level QoS parameter and/or a bearer-level QoS (Quality of service, Quality of service) parameter. Specifically, in a scenario in which the first indication information is used to indicate that the bearer type required by the control plane node is a secondary-cell split bearer, the QoS parameter includes the bearer-level QoS parameter; and in a scenario in which the first indication information is used to indicate at least one of the following: the user plane node is required to have a packet data convergence protocol layer function, the user plane node is required to have a master-cell resource configuration, or the user plane node is required to have a secondary-cell resource configuration, the QoS parameter includes at least one of a bearer-level QoS parameter, a maximum-bearer-level QoS parameter that can be borne by an MCG, and a maximum-bearer-level QoS parameter that can be borne by an SCG. Specifically, the QoS parameter specifically includes at least one of a QCI (QoS Class Identifier, QoS class identifier), an allocation and retention priority (allocation and retention priority), and guaranteed bit-rate QoS information (GBR QoS information).

For example, as shown in FIG. 7, the SN-CP sends an E1 AP message (for example, a UE bearer setup request message) to the SN-UP, and the UE bearer setup request message may carry the first indication information.

The method 200 further includes the following steps.

S231. The second network node sends a fourth message to the control plane node, and the control plane node receives the fourth message sent by the second network node, where the fourth message includes the downlink tunnel endpoint of the first interface.

It should be understood that the fourth message may be an F1 AP message, for example, a UE context setup request message, a UE context modification request message, an existing F1 AP message, or a new F1 AP message. This is not limited in this application.

For example, as shown in FIG. 7, the DU receives a UE context setup request message sent by the SN-CP, and the DU returns an F1 AP message (for example, a UE context setup response message) to the SN-CP, where the UE context setup response message carries an F1 DL GTP tunnel endpoint. S232. The control plane node sends a fifth message to the user plane node, and the user plane node receives the fifth message sent by the control plane node, where the fifth message includes at least one of the downlink tunnel endpoint of the first interface, the downlink tunnel endpoint of the second interface, and the uplink tunnel endpoint of the third interface.

It should be understood that the fifth message may be an E1 AP message, for example, a UE bearer setup request message, a UE bearer modification request message, an existing E1 AP message, or a new E1 AP message. This is not limited in this application.

It should be understood that before the user plane node assigns the tunnel endpoints, the control plane node may send the fifth message to the user plane node, where the fifth message may include the first indication information, and the fifth message may further include the downlink tunnel endpoint of the second interface and/or the uplink tunnel endpoint of the third interface.

It should be further understood that, after receiving the fourth message sent by the second network node, the control plane node may send the fifth message to the user plane node, where the fifth message includes the downlink tunnel endpoint of the first interface.

For example, as shown in FIG. 7, the fifth message may be a UE bearer setup request message, and the UE bearer setup request message carries an X2 DL GTP tunnel endpoint and/or an S1 UL GTP tunnel endpoint.

For another example, as shown in FIG. 7, the fifth message may be a UE bearer modification request message, and the UE bearer modification request message carries an F1 DL GTP tunnel endpoint.

S233. The user plane node sends a request response message to the control plane node, and the control plane node receives the request response message sent by the user plane node.

For example, as shown in FIG. 7, the SN-UP sends a UE bearer modification response message to the SN-CP.

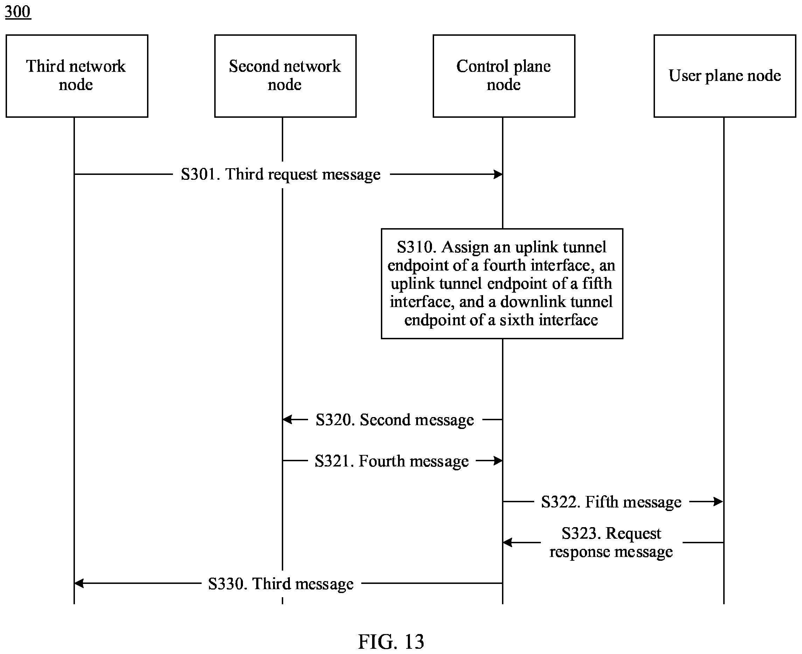

According to the transmission method in this embodiment of this application, a process of setting up a user plane tunnel of the second bearer is provided, and the user plane node determines different tunnel endpoints, helping resolve a problem of assignment and indication of uplink and downlink tunnels on a user plane especially when network segments of interfaces are inconsistent. The transmission method 200 in this embodiment of this application is described above in detail with reference to FIG. 12. In the method 200, tunnel endpoint assignment performed by the user plane node is described. The following describes in detail a method 300 in an embodiment of this application with reference to FIG. 13. In the method 300, how a control plane node assigns tunnel endpoints is described.

Table 2, Table 3, and Table 4 show addresses provided by network nodes in the transmission method 200, as shown in Table 2, Table 3, and Table 4.

**Table 2 Addresses provided by a CU-CP and a CU-UP**

| Tunnel endpoint interaction | CU-CP | CU-UP |
|---|---|---|
| Method 200 | S1/NG UL GTP tunnel endpoint | S1/NG DL GTP tunnel endpoint |
| | X2/Xn DL GTP tunnel endpoint | X2/Xn UL GTP tunnel endpoint |
| | F1 DL GTP tunnel endpoint | F1 UL GTP tunnel endpoint |

**Table 3 Addresses provided by a CU-UP and an M-eNB**

| Tunnel endpoint interaction | M-eNB | CU-CP |
|---|---|---|
| Method 200 | S1/NG UL tunnel endpoint | S1/NG DL tunnel endpoint |
| | X2/Xn DL tunnel endpoint | X2/Xn UL tunnel endpoint |

**Table 4 Addresses provided by a CU-UP and a DU**

| Tunnel endpoint interaction | CU-CP | DU |
|---|---|---|
| Method 200 | F1 UL tunnel endpoint | F1 DL tunnel endpoint |

FIG. 13 is a schematic flowchart of a transmission method 300 according to an embodiment of this application. As shown in FIG. 13, in the method 300, a user plane node may be the SN-UP in FIG. 7, a control plane node may be the SN-CP in FIG. 7, a second network node may be the DU in FIG. 7, a third network node may be the MN in FIG. 7, and a core network node may be the UPF in FIG. 7. The transmission method 300 includes the following steps.

S310. The control plane node determines an uplink tunnel endpoint of a first interface, an uplink tunnel endpoint of a second interface, and a downlink tunnel endpoint of a third interface, where the first interface is an interface between the user plane node and the second network node, the second interface is an interface between the user plane node and the third network node, the third interface is an interface between the user plane node and the core network node, and the first interface, the second interface, and the third interface are different interfaces.

S320. The control plane node sends a second message to the second network node, and the second network node receives the second message sent by the control plane node, where the second message includes the uplink tunnel endpoint of the first interface.

S330. The control plane node sends a third message to the third network node, and the third network node receives the third message sent by the control plane node, where the third message includes the uplink tunnel endpoint of the second interface and the downlink tunnel endpoint of the third interface.

It should be understood that there is no actual sequence between S320 and S330.

It should be understood that the second message may be an F1 AP message, such as a UE context setup request message or a UE context modification request message, another existing F1 AP message, or a new message. This is not limited in this application.

It should be understood that the third message may be an X2 AP message, such as an S-gNB addition request acknowledge message or an S-gNB modification request acknowledge message, another existing X2 AP message, or a new message. This is not limited in this application. Optionally, the tunnel endpoint in S310 to S330 is a tunnel endpoint of a specific bearer, a specific session, and/or a specific QoS flow. Specifically, the user plane node determines the uplink tunnel endpoint of the first interface, the uplink tunnel endpoint of the second interface, and the downlink tunnel endpoint of the third interface that are of the specific bearer, the specific session, and/or the specific QoS flow.

Optionally, the uplink tunnel endpoint of the first interface, the uplink tunnel endpoint of the second interface, and the downlink tunnel endpoint of the third interface are carried in an E1 AP message and sent by the control plane node to the user plane node, where the E1 AP message may be a UE bearer setup request message or a UE bearer modification request message, another existing E1 AP message, or a new message. This is not limited in this application.

Optionally, the control plane node assigns the tunnel endpoints based on a preconfigured address pool of the user plane node. The address pool of the user plane node may be exchanged in a process of setting up an E1 AP interface, or may be preconfigured by a network management system (OAM, operation and maintenance management system). This is not limited in this application. Optionally, the user plane node includes at least one of a radio resource control protocol layer function, a service data adaptation protocol layer function, and a packet data convergence protocol layer function; and/or
the second network node includes at least one of a packet data convergence protocol layer function, a radio link control protocol layer function, a media access control layer function, and a physical layer function; and/or
the third network node includes at least one of a radio resource control protocol layer function, a service data adaptation protocol layer function, a packet data convergence protocol layer function, a radio link control protocol layer function, a media access control layer function, and a physical layer function.

Specifically, the control plane node assigns the uplink tunnel endpoint of the first interface, the uplink tunnel endpoint of the second interface, and the downlink tunnel endpoint of the third interface. The control plane node sends the second message to the second network node, and sends the third message to the third network node, where the second message includes the uplink tunnel endpoint of the first interface, and the third message includes the uplink tunnel endpoint of the second interface and the downlink tunnel endpoint of the third interface.

It should be understood that network segments of the first interface, the second interface, and the third interface are inconsistent (for example, some are internal networks, and some are external networks). In this case, the uplink tunnel endpoint of the first interface, the uplink tunnel endpoint of the second interface, and the downlink tunnel endpoint of the third interface are different.

It should be further understood that if the network segments of the first interface, the second interface, and the third interface are consistent, the uplink tunnel endpoint of the first interface, the uplink tunnel endpoint of the second interface, and the downlink tunnel endpoint of the third interface are the same.

For example, as shown in FIG. 7, the first interface is an F1 interface, the second interface is an X2 interface (or an Xn interface, where the X2 interface is used as an example for description below), and the third interface is an S 1 interface.

For another example, as shown in FIG. 7, the uplink tunnel endpoint of the first interface is an F1 UL GTP tunnel endpoint, a downlink tunnel address of the first interface is an F1 DL GTP tunnel endpoint, the uplink tunnel endpoint of the second interface is an X2 UL GTP tunnel endpoint, a downlink tunnel endpoint of the second interface is an X2 DL GTP tunnel endpoint, an uplink tunnel address of the third interface is S1 UL GTP tunnel endpoint, and a downlink tunnel address of the third interface is an S1 DL GTP tunnel endpoint. It should be understood that the tunnel endpoints may be in a one-to-one correspondence with bearers, sessions, and/or QoS flows.

For another example, as shown in FIG. 7, the SN-CP first assigns an F1 UL TP tunnel endpoint, an X2 UL GTP tunnel endpoint, and an S1 DL GTP tunnel endpoint. The SN-CP sends an F1 AP message (for example, a UE context setup request message) to the DU, where the UE context setup request message carries the F1 UL GTP tunnel endpoint. The SN-CP sends an X2 AP message (for example, an SgNB addition request ACK message) to the MN, where the SgNB addition request ACK message carries the X2 UL GTP tunnel endpoint and the S1 DL GTP tunnel endpoint. It should be understood that the tunnel endpoints may be in a one-to-one correspondence with bearers, sessions, and/or QoS flows.

Optionally, if data forwarding is supported, the third message further carries a data forwarding (data forwarding) address of the X2 interface, and the second message further carries a data forwarding address of the F1 interface. The addresses may be assigned by the control plane node or the user plane node. Similarly, if the addresses are assigned by the user plane node, the addresses may be sent by the user plane node to the control plane node. Specifically, the data forwarding address of the X2 interface includes a downlink data forwarding address and an uplink data forwarding address (for example, a DL forwarding X2 GTP tunnel endpoint, indicating that an X2 transmission bearer is used to forward downlink data packets PDUs, and a UL forwarding X2 GTP tunnel endpoint, indicating that the X2 transmission bearer is used to forward uplink data packets PDUs). The data forwarding address of the F1 interface includes a downlink data forwarding address and an uplink data forwarding address (for example, a DL forwarding F1 GTP tunnel endpoint, indicating that an F1 transmission bearer is used to forward downlink data packets PDUs, and a UL forwarding F1 GTP tunnel endpoint, indicating that the F1 transmission bearer is used to forward uplink data packets PDUs). The forwarding address is a GTP tunnel endpoint (including a transmission IP address and a TEID). It should be noted that the data forwarding address of the X2 interface and the data forwarding address of the F1 interface may be in a one-to-one correspondence with bearers. Optionally, if data forwarding is supported, and the data forwarding addresses are assigned by the control plane node, alternatively, the data forwarding address of the X2 interface may be carried in the E1 AP message and sent by the control plane node to the user plane node.

Optionally, the E1 AP message sent by the control plane node to the user plane node carries indication information, where the indication information is used to indicate a correspondence between a data forwarding address and an interface.

Optionally, if data forwarding is supported, and the data forwarding addresses are assigned by the control plane node, alternatively, the data forwarding address of the F1 interface may be carried in the F1 AP message and sent by the control plane node to the second network node, or the data forwarding address of the F1 interface may be carried in the E1 AP message and sent by the control plane node to the user plane node.

Optionally, if data forwarding is supported, and the data forwarding addresses are assigned by the user plane node, before the control plane node receives the data forwarding addresses, the control plane node sends a data forwarding instruction to the user plane node, where the data forwarding instruction is used to instruct the user plane node to forward downlink data. Further, alternatively, the data forwarding instruction may be used to instruct the user plane node to forward downlink data of a specific bearer, a specific session, and/or a specific QoS flow.

Optionally, the method 300 further includes the following step:
S301. The third network node sends a third request message to the control plane node, and the control plane node receives the third request message sent by the third network node, where the third request message is used to request the control plane node to allocate a radio resource to a second bearer.

Optionally, the second bearer is a secondary-cell split bearer (SCG Split Bearer).

Optionally, characteristics of the second bearer are specified in the third request message, and include a bearer parameter and a TNL address corresponding to a bearer type.

Optionally, the third network node adds a latest measurement result to the third request message. Optionally, the third request message includes a downlink tunnel endpoint of the second interface and/or an uplink tunnel endpoint of the third interface.

Optionally, the third request message includes a bearer and/or session configuration parameter, for example, at least one of a bearer identifier (ERAB ID or DRB ID), a bearer-level QoS parameter, a data packet session identifier, a QoS flow indicator (QoS flow indicator, QFI), a mapping relationship between a bearer and a QFI, and a QFI-level QoS parameter.

Optionally, the third request message includes a data forwarding instruction, for example, a data forwarding instruction (for example, DL forwarding) of a specific bearer.

Specifically, before the control plane node assigns the tunnel endpoint, the third network node sends the third request message to the control plane node, where the third request message is used to request the control plane node to allocate a radio resource to the second bearer.

For example, as shown in FIG. 7, the MN sends an X2 AP message (for example, an SgNB addition request message) to the SN-CP, where the SgNB addition request message carries an X2 DL GTP tunnel endpoint, an S1 UL GTP tunnel endpoint, and bearer and/or session configuration information (for example, at least one of a bearer identifier ERAB ID, a bearer-level QoS parameter, a data packet session identifier, a QoS flow indicator (QoS flow indicator, QFI), a mapping relationship between a bearer and a QFI, a QFI-level QoS parameter, and a bearer-level QoS parameter).

Optionally, the method 300 further includes the following steps.

S321. The second network node sends a fourth message to the control plane node, and the control plane node receives the fourth message sent by the second network node, where the fourth message includes a downlink tunnel endpoint of the first interface.

For example, as shown in FIG. 7, the DU receives a UE context setup request message sent by the SN-CP, and the DU returns an F1 AP message (for example, a UE context setup response message) to the SN-CP, where the UE context setup response message carries an F1 DL GTP tunnel endpoint. S322. The control plane node sends a fifth message to the user plane node, and the user plane node receives the fifth message sent by the control plane node, where the fifth message includes at least one of the uplink tunnel endpoint of the first interface, the downlink tunnel endpoint of the first interface, the uplink tunnel endpoint of the second interface, the downlink tunnel endpoint of the second interface, the uplink tunnel endpoint of the third interface, and the downlink tunnel endpoint of the third interface.

It should be understood that the fifth message is an E1 AP message, for example, a UE bearer setup request message, a UE bearer modification request message, another existing E1 AP message, or a new message. This is not limited in this application.

According to the transmission method in this embodiment of this application, messages sent by the control plane node to the user plane node carry tunnel endpoints of uplink and downlink tunnels, so that the user plane node can identify whether data is sent to the user plane node.

Optionally, the fifth message further includes indication information, where the indication information is used to indicate a correspondence between a tunnel endpoint and an interface. For example, the indication information indicates, to the user plane node, that the uplink tunnel endpoint of the first interface is used for the first interface, that the uplink tunnel endpoint of the second interface is used for the second interface, and/or that the downlink tunnel endpoint of the third interface is used for the third interface.

For example, the SN-CP sends an E1 AP message (for example, a UE bearer setup request message) to the SN-UP, where the UE bearer setup request message carries at least one of an F1 UL GTP tunnel endpoint, an F1 DL GTP tunnel endpoint, an X2 UL GTP tunnel endpoint, an X2 DL GTP tunnel endpoint, an S1 UL GTP tunnel endpoint, and an S1 DL GTP tunnel endpoint.

S323. The user plane node sends a request response message to the control plane node, and the control plane node receives the request response message sent by the user plane node.

For example, as shown in FIG. 7, the SN-UP sends a UE bearer setup response message to the SN-CP.

It should be understood that, the downlink tunnel endpoint of the third interface may alternatively be assigned by the user plane node, and therefore the request response message carries the downlink tunnel endpoint of the third interface. Further, the request response message may further carry indication information, used to indicate that the downlink tunnel endpoint of the third interface is used for the third interface.

According to the transmission method in this embodiment of this application, a process of setting up a user plane tunnel of the second bearer is provided, and the control plane node determines different tunnel endpoints, helping resolve a problem of assignment and indication of uplink and downlink tunnels on a user plane especially when network segments of interfaces are inconsistent. Table 5, Table 6, and Table 7 show addresses provided by network nodes in the transmission method 300, as shown in Table 5, Table 6, and Table 7.

**Table 5 Addresses provided by a CU-CP and a CU-UP**

| Tunnel endpoint interaction | CU-CP | CU-UP |
|---|---|---|
| Method 300 | At least some of: S1/NG UL GTP tunnel endpoint | |
| | X2/Xn DL GTP tunnel endpoint | |
| | F1 DL GTP tunnel endpoint | |
| | S1/NG DL GTP tunnel endpoint | |
| | X2/Xn UL tunnel endpoint | |
| | F1 UL tunnel endpoint | |

**Table 6 Addresses provided by a CU-UP and an M-eNB**

| Tunnel endpoint interaction | M-eNB | CU-CP |
|---|---|---|
| Method 300 | S1/NG UL tunnel endpoint | S1/NG DL tunnel endpoint |
| | X2/Xn DL tunnel endpoint | X2/Xn UL tunnel endpoint |

**Table 7 Addresses provided by a CU-UP and a DU**

| Tunnel endpoint interaction | CU-CP | DU |
|---|---|---|
| Method 300 | F1 UL tunnel endpoint | F1 DL tunnel endpoint |

It should be understood that, in the transmission method 200 and the transmission method 300, only processes in which the tunnel endpoints (the uplink tunnel endpoint of the first interface, the uplink tunnel endpoint of the second interface, and the downlink tunnel endpoint of the third interface) are assigned by the user plane node and the control plane node are described, and the tunnel endpoints may alternatively be assigned through cooperation between the control plane node and the user plane node. For example, the user plane node assigns the uplink tunnel endpoint of the first interface and the uplink tunnel endpoint of the second interface, and the control plane node assigns the downlink tunnel endpoint of the third interface. For another example, the control plane node assigns the uplink tunnel endpoint of the first interface and the uplink tunnel endpoint of the second interface, and the user plane node assigns the downlink tunnel endpoint of the third interface. Assignment may be performed in any combination, and this application is not limited thereto.

The foregoing describes in detail, by using the method 100 to the method 300, processes of assigning and indicating user-plane uplink and downlink tunnel endpoints. The following describes traffic statistics, power distribution, and cell identifier addition processes in detail with reference to a method 400 to a method 700.

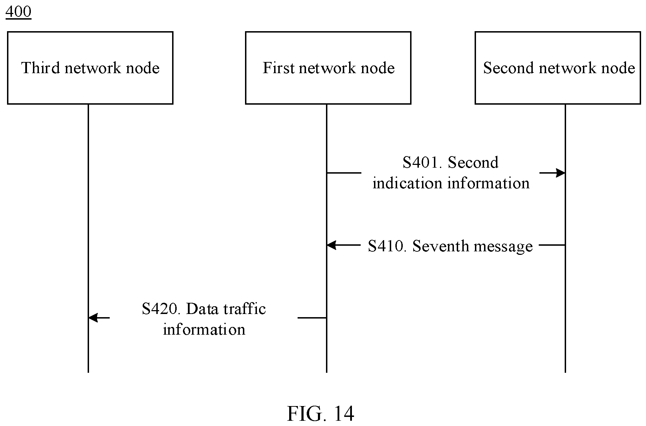

FIG. 14 is a schematic flowchart of a transmission method 400 according to an embodiment of this application. As shown in FIG. 14, in the method 400, a first network node may be the first network node in FIG. 1, the CU in FIG. 2, the S-gNB-CU in FIG. 3, or the SgNB-CP in FIG. 4, a second network node may be the second network node in FIG. 1, the DU in FIG. 2, the S-gNB-DU in FIG. 3, or the S-gNB-DU in FIG. 4, and a third network node may be the M-eNB in FIG. 3 or the M-eNB in FIG. 4. The transmission method 400 includes the following steps.

S410. The second network node sends a seventh message to the first network node, and the first network node receives the seventh message from the second network node, where the seventh message includes data traffic information transmitted by the second network node.

It should be understood that the seventh message may be an F1 AP message, such as a UE context setup response message, a UE context modification response message, a UE context modification required message, another existing F1 AP message, or a new message. This is not limited in this application.

The first network node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function; and/or the third network node includes at least one of a radio resource control protocol layer function, a service data adaptation protocol layer function, a packet data convergence protocol layer function, a radio link control protocol layer function, a media access control layer function, and a physical layer function.

Optionally, the first network node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

Optionally, the data traffic information transmitted by the second network node includes at least one of uplink data traffic transmitted by the second network node, downlink data traffic transmitted by the second network node, and a statistics collection start time and end time of collecting statistics about data traffic transmitted by the second network node.

Optionally, the data traffic information of the second network node includes traffic information of some bearers such as an MCG split bearer, an SCG bearer, and an SCG Split Bearer.

Optionally, the data traffic information of the second network node includes traffic information of a specific bearer, a specific session, and/or a specific QoS flow, such as an ERAB ID 1, an ERAB ID 2, a session ID 1, and a QFI 1.

It should be understood that the data traffic information herein may be data traffic information transmitted by a secondary base station, that is, data traffic transmitted to a terminal device through an air interface of the secondary base station.

For example, as shown in FIG. 3, the S-gNB-DU may actively report data traffic information of the S-gNB-DU to the S-gNB-CU. The S-gNB-DU may add the data traffic information to an F1 AP message (such as a UE context setup request message, a UE context modification request message, or a UE context modification require message). Alternatively, the F1 AP message is another existing message or a new message. This application is not limited thereto.

For another example, as shown in FIG. 4, the S-gNB-DU may actively report data traffic information of the S-gNB-DU to the S-gNB-CP. The S-gNB-DU may add the data traffic information to an F1 AP message (such as a UE context setup request message, a UE context modification request message, or a UE context modification require message). Alternatively, the F1 AP message is another existing message or a new message. This application is not limited thereto.

It should be understood that the data traffic information may include at least one of a bearer identifier (ERAB ID), a session identifier (PDU session ID), a QoS flow indicator (QoS flow indicator, QFI) a timestamp (start timestamp) at which statistics about traffic starts to be collected, a timestamp (end timestamp) at which collection of statistics about traffic ends, uplink data traffic information (usage count UL), or downlink data traffic information (usage count DL). Optionally, the method 400 further includes the following step:
S401. The first network node sends second indication information to the second network node, and the second network node receives the second indication information sent by the first network node, where the second indication information is used to instruct the second network node to report the data traffic information transmitted by the second network node.

It should be understood that, if the secondary base station supports a CU-DU architecture or the secondary base station supports a CP-UP architecture, when data is sent from a master base station to a DU of the secondary base station, the DU of the secondary base station collects statistics about the transmitted data traffic based on the second indication information sent by a CU of the secondary base station. The second indication information is sent by using an F1 AP message such as a UE context setup request message, a UE context modification request message, or a UE context modification confirmation message between the CU and the DU, or may be sent by using another existing message or a new message. This is not limited in this application.

It should be further understood that before this step, a plurality of links need to be set up, and a process of setting up the plurality of links is similar to that in the prior art. For brevity, details are not described herein.

It should be further understood that this step is optional. That is, the DU of the secondary base station may actively collect statistics about and report traffic of transmitted data.

Optionally, the second indication information includes but is not limited to one or more of the following:
(1) Explicitly instruct the second network node to report traffic information about which statistics are collected.
(2) Instruct the second network node to report traffic information of a specific bearer (including at least one of a specific bearer, a specific session, and a specific QoS flow), a start time and an end time of traffic statistics collection, a start time and an end time of collecting statistics about traffic of a specific bearer, uplink and downlink traffic statistics, uplink and downlink traffic statistics of a specific bearer, or the like. For example, the second indication information includes at least one of a bearer identifier (ERAB ID), a time stamp (start timestamp) at which traffic statistics collection starts, a time stamp (end timestamp) at which traffic statistics collection ends, a timestamp at which collection of traffic statistics of a specific bearer starts, a timestamp at which collection of traffic statistics of the specific bearer ends, statistical information of uplink data traffic of the specific bearer, statistical information of downlink data traffic of the specific bearer, uplink data traffic information (usage count UL), or downlink data traffic information (usage count DL).
(3) Instruct to report a reporting period of the data traffic information.

Optionally, the method 400 further includes the following step:
S420. The first network node sends the data traffic information of the second network node to the third network node, and the third network node receives the data traffic information from the first network node.

Specifically, after receiving the data traffic information sent by the second network node, the first network node may send the data traffic information to the third network node.

For example, as shown in FIG. 3, the S-gNB-CU sends a secondary RAT data usage report to the M-eNB, where the secondary RAT data usage report message carries data traffic information of the S-gNB-DU.

For another example, as shown in FIG. 4, the S-gNB-CP sends a secondary RAT data usage report to the M-eNB, where the secondary RAT data usage report message carries data traffic information of the S-gNB-DU.

Optionally, the data traffic information includes at least one of a bearer identifier (ERAB ID), a timestamp (start timestamp) at which traffic statistics collection starts, a timestamp (end timestamp) at which traffic statistics collection ends, uplink data traffic information (usage count UL), or downlink data traffic information (usage count DL).

Optionally, the data traffic information further includes secondary base station type (Secondary Rat Type) information, and the secondary RAT type information may be added to a traffic statistics report (Secondary Rat Data Usage Report) and sent to the master base station after the CU of the secondary base station receives the data traffic information sent by the DU of the secondary base station. Alternatively, the secondary RAT type information may be added by the DU of the secondary base station to traffic statistics information and sent to the CU of the secondary base station. After receiving the traffic statistics information, the CU of the secondary base station sends the traffic statistics information to the master base station. In this case, the CU of the secondary base station may modify or may not modify the secondary RAT type.

It should be understood that the transmission method 400 in this embodiment of this application may be an independent embodiment, or may be combined with another embodiment. For example, the transmission method 400 may be based on the transmission method 100. This application is not limited thereto.

It should be further understood that the data traffic information in this embodiment of this application may specifically include one or more of data PDUs, an IP header or a transmission control protocol (transmission control protocol, TCP)/user datagram protocol (user datagram protocol, UDP) header in a data packet, a TCP control packet (for example, an ACK), or a retransmitted data packet.

According to the transmission method in this embodiment of this application, in a multi-link scenario in which the secondary base station supports the CU-DU architecture, when the master base station directly performs user-plane data transmission with the DU of the secondary base station, a problem of traffic statistics of the secondary base station is resolved.

The following describes a transmission method 500 according to an embodiment of this application. The transmission method 500 is mainly applicable to a case in which a master base station and a secondary base station both support a CU-DU architecture.

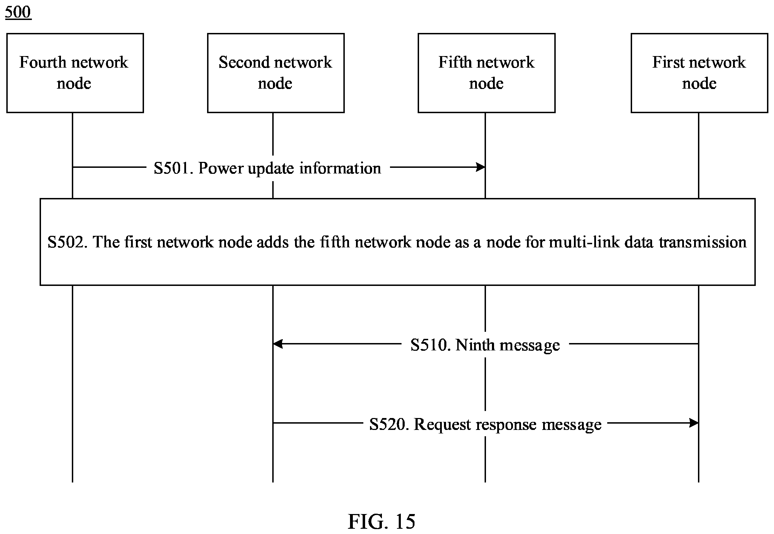

FIG. 15 is a schematic flowchart of the transmission method 500 according to an embodiment of this application. As shown in FIG. 15, a first network node may be the M-gNB-CU in FIG. 5, and a second network node may be the M-gNB-DU in FIG. 5. The transmission method 500 includes the following steps.

S510. The first network node sends a ninth message to the second network node, and the second network node receives the ninth message sent by the first network node, where the ninth message includes a first power configuration parameter of the second network node, and the first power configuration parameter is maximum transmit power that can be used by a terminal device in a master cell group.

Specifically, the power configuration parameter of the second network node may be determined by the first network node, and the first network node sends the ninth message to the second network node, where the ninth message includes the first power configuration parameter of the second network node.

For example, as shown in FIG. 5, a specific value of a power configuration parameter (for example, P-maxMCG, where a specific name is not limited in this application) of the M-gNB-DU is determined by the M-gNB-CU. The F1 interface message may be a message such as a UE context setup request message or a UE context modification request message.

Optionally, the first network node sends the first power configuration parameter to a fourth network node.

Optionally, the method 500 further includes the following step:
S520. The second network node sends a request response message to the first network node.

For example, as shown in FIG. 5, the M-gNB-DU sends a message such as a UE context setup response message or a UE context modification response message to the M-gNB-CU.

Optionally, the method 500 further includes:
sending, by the second network node, a tenth message to the first network node, where the tenth message includes a second power configuration parameter of the second network node, and the second power configuration parameter is the maximum transmit power that can be used by the terminal device in the master cell group.

It should be understood that when a power configuration parameter of the second network node is updated, the tenth message may be sent to the first network node.

Optionally, the method 500 further includes the following step:
S501. The fourth network node sends power update information to a fifth network node, where the power update information includes an updated third power configuration parameter of the fourth network node, and the third power configuration parameter is maximum transmit power that can be used by the terminal device in a secondary cell group.

It should be understood that the fourth network node may be the S-gNB-DU in FIG. 5, and the fifth network node may be the S-gNB-CU in FIG. 5.

Optionally, the power update information may be in an existing information element CellGroupConfig sent by the fourth network node to the fifth network node. It should be understood that after receiving CellGroupConfig, the fifth network node needs to parse CellGroupConfig to read the power update information from CellGroupConfig, so as to determine whether power is updated.

Optionally, the power update information may be used as an explicit information element (for example, P-maxSCG) and carried in an F1 AP message sent by the fourth network node to the fifth network node. It should be understood that after receiving the power update information, the fifth network node directly reads the power update information, and then determines whether power is updated. In this selectable item, the power update information may be set or may not be set in Cell GroupConfig.

Optionally, after the fifth network node determines that the power is updated, updated power is carried in an X2 interface message that is sent by the fifth network node to the first network node (where optionally, the X2 interface message may further carry a power update instruction, to instruct the first network node to update a power parameter of the master cell group). It should be understood that the X2 interface message may be an SgNB modification required message, an SgNB addition request ACK message, an SgNB modification request ACK message, another existing X2 AP message, or a new message. This is not limited in this application.

Optionally, after the fifth network node determines that the power is updated, updated power is carried in the X2 interface message that is sent by the fifth network node to the first network node. Specifically, the updated power is carried in an information element CellGroupConfig. After receiving the X2 interface message, parsing the information element CellGroupConfig, and obtaining the updated power, the first network node determines whether a power parameter of the master cell group needs to be updated. It should be understood that the X2 interface message may be an SgNB modification required message, an SgNB addition request ACK message, an SgNB modification request ACK message, another existing X2 AP message, or a new message. This is not limited in this application.

Optionally, after receiving the X2 interface message, the first network node determines whether to accept a configuration. Specifically, the first network node may determine whether to accept the power update information, and send a feedback message to the fifth network node, where the feedback message may directly include a rejection message, or include new power information or the like (where for example, the feedback message may be carried in an existing message such as an SgNB modification confirmation message, an SgNB modification reject message, an SgNB modification request message, or a new X2 AP message, which is not limited in this application). Specifically, some configurations of the fourth network node need to be updated, for example, a power configuration (for example, P-maxSCG). The power configuration parameter is the maximum transmit power that can be used by the terminal device in the secondary cell group. Because the fourth network node controls a scheduler for uplink transmission, the fourth network node has right to modify the maximum transmit power that can be used by the terminal device in the secondary cell group, and the power configuration parameter of the fourth network node is sent to the fifth network node by using the power update information.

Optionally, S501 is a process of modifying a configuration of the fourth network node, and the fifth network node may determine the updated power configuration parameter of the fourth network node.

For example, as shown in FIG. 5, the power configuration parameter of the S-gNB-DU may be transmitted from the S-gNB-DU to the S-gNB-CU by using an F1 interface message. Specifically, the F1 AP message is, for example, a UE context setup response message, a UE context modification require/response message, or a new message. This is not limited in this application. S502. The first network node adds the fifth network node as a node for multi-link data transmission (Secondary Node Addition).

Specifically, S502 is similar to an existing multi-link setup process, and for brevity, details are not described herein.

Optionally, in S502, the power configuration parameter of the fourth network node is determined by the first network node, and is sent to the fourth network node by using the fifth network node. For example, a message such as a UE context setup request message or a UE context modification request message may be sent in an S-gNB-DU context setup request process or in an S-gNB-DU context modification process, or a new F 1 AP message may be sent. This application is not limited thereto.

It should be understood that the transmission method 500 in this embodiment of this application may be an independent embodiment, or may be combined with another embodiment. For example, the transmission method 500 may be combined with the transmission method 200 and the transmission method 300. To be specific, when a third network node (for example, the MN in FIG. 7) in the transmission method 200 and the transmission method 300 supports a CU-DU architecture, a CU of the third network node may send a power configuration parameter of a DU of the third network node to the DU of the third network node, or the second network node may send power update information to the control plane node.

According to the transmission method in this embodiment of this application, when the master base station and the secondary base station are of the CU-DU architecture, power distribution in a multi-link scenario is implemented, helping avoid that total transmit power of a terminal device frequently exceeds maximum transmit power of the terminal device.

The foregoing describes the power distribution process by using the transmission method 500. In the method 500, both the master base station and the secondary base station are of the CU-DU architecture. The following describes another power distribution process by using a transmission method 600. Different from that in the method 500, a master base station and a secondary base station are of a one-CU multi-DU architecture.

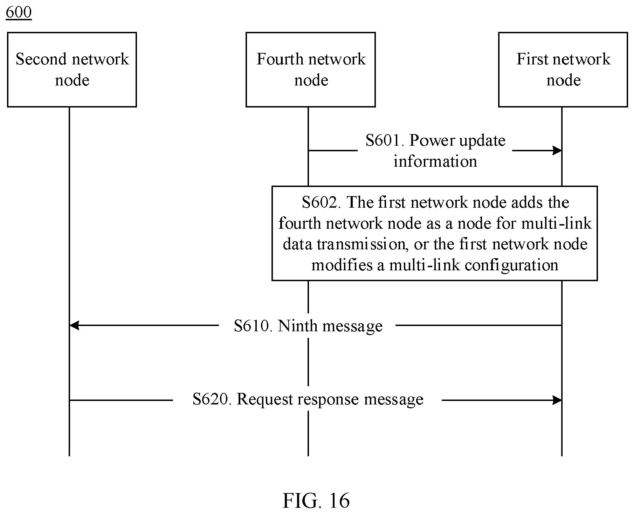

FIG. 16 is a schematic flowchart of the transmission method 600 according to an embodiment of this application. As shown in FIG. 16, a first network node may be the gNB-CU in FIG. 6, and a second network node may be the M-gNB-DU in FIG. 6. The transmission method 600 includes the following steps.

S610. The first network node sends a ninth message to the second network node, and the second network node receives the ninth message sent by the first network node, where the ninth message includes a first power configuration parameter of the second network node, and the first power configuration parameter is maximum transmit power that can be used by a terminal device in a master cell group.

Specifically, the first power configuration parameter of the second network node may be determined by the first network node, and the first network node sends the ninth message to the second network node, where the ninth message includes the first power configuration parameter of the second network node.

For example, as shown in FIG. 6, a specific value of a power configuration parameter (P-maxMCG, where a specific name is not limited in this application) of the M-gNB-DU is determined by the gNB-CU, and the F1 interface message may be a message such as a UE context setup request message or a UE context modification request message.

It should be understood that the first network node may further send the first power configuration parameter of the second network node to a fourth network node.

Optionally, the transmission method 600 further includes the following step:
S620. The second network node sends a request response message to the first network node.

For example, as shown in FIG. 6, the M-gNB-DU sends a message such as a UE context setup response message or a UE context modification response message to the gNB-CU.

Optionally, the transmission method 600 further includes:
sending, by the second network node, a tenth message to the first network node, where the tenth message includes a second power configuration parameter of the second network node, and the second power configuration parameter is the maximum transmit power that can be used by the terminal device in the master cell group.

It should be understood that when a power configuration parameter of the second network node is updated, the tenth message may be sent to the first network node.

Optionally, the transmission method 600 further includes the following steps.

S601. The fourth network node sends power update information to the first network node, where the power update information includes a third power configuration parameter updated by the fourth network node, and the third power configuration parameter is maximum transmit power that can be used by the terminal device in a secondary cell group.

It should be understood that S601 is similar to S501. For brevity, details are not described herein again.

For example, as shown in FIG. 6, a power configuration parameter of the S-gNB-DU may be transmitted from the S-gNB-DU to the gNB-CU by using an F1 interface message. Specifically, the F1 AP message is, for example, a UE context setup response, UE context modification require/response message, or a new message. This is not limited in this application. For example, the power configuration parameter may be carried in an information element DU to CU information in the message.

S602. The first network node adds the fourth network node as a node for multi-link data transmission (Secondary Node Addition), or the first network node modifies a multi-link configuration (Secondary Node Modification).

Specifically, S602 is similar to an existing multi-link setup process, and for brevity, details are not described herein again.

For example, a message such as a UE context setup request message or a UE context modification request message may be sent in an S-gNB-DU addition request process or in an S-gNB-DU modification process, or a new F 1 AP message may be sent. This application is not limited thereto. It should be understood that the transmission method 600 in this embodiment of this application may be an independent embodiment, or may be combined with another embodiment.

According to the transmission method in this embodiment of this application, the master base station and the secondary base station are of the one-CU multi-DU architecture, power distribution in a multi-link scenario is implemented, helping avoid that total transmit power of a terminal device frequently exceeds maximum transmit power of the terminal device.

It should be noted that in the transmission method 500 and the transmission method 600, the first network node sends the first power configuration parameter and the second power configuration parameter to the terminal device by using dedicated signaling (for example, an RRC message). It should be understood that, the first network node sends, to the terminal device by using an RRC message, the maximum transmit power that can be used by the terminal device in the master cell group and the maximum transmit power that can be used in the secondary cell group.

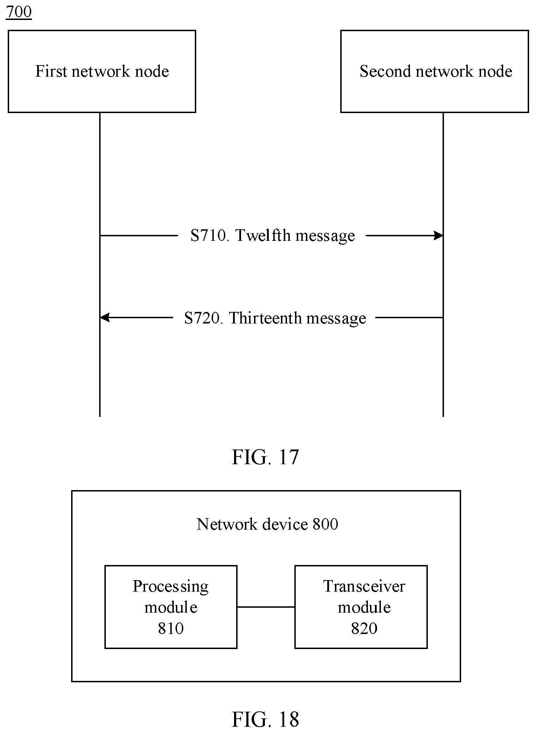

FIG. 17 is a schematic flowchart of a transmission method 700 according to an embodiment of this application. As shown in FIG. 17, a first network node may be the first network node in FIG. 1 or the CU in FIG. 2, and a second network node may be the second network node in FIG. 2 or the DU in FIG. 2. The transmission method 700 includes the following steps.

S710. The first network node sends a twelfth message to the second network node, where the twelfth message includes a cell group identifier of the second network node.

S720. The second network node sends a thirteenth message to the first network node, and the first network node receives the thirteenth message sent by the second network node, where the thirteenth message includes the cell group identifier of the second network node.

The first network node includes at least one of a radio resource control protocol layer function, a service data adaptation protocol layer function, and a packet data convergence protocol layer function; and/or
the second network node includes at least one of a radio link control protocol layer
function, a media access control layer function, and a physical layer function. Optionally, before the first network node sends the twelfth message to the second network node, the first network node assigns the cell group identifier of the second network node to the second network node.

It should be understood that the second network node is one of a plurality of network nodes that are in a link (dual-connectivity or multi-connectivity) of a specific terminal device.

Specifically, in a dual-connectivity or multi-connectivity scenario, a DU may determine, based on whether RRC configuration reference information (CU-to-DU RRC information) sent by a CU to the DU includes secondary cell group configuration information (SCG-ConfigInfo), whether the DU is a secondary cell group of the terminal device. For dual-connectivity, the DU may determine that CellGroupId is 1, and for multi-connectivity, the DU cannot know how to set CellGroupId of an SCG correctly. In this case, CellGroupId of the DU is added to the RRC configuration reference information sent by the CU to the DU, and the DU may know how to set CellGroupId of the SCG in a cell group configuration fed back to the CU.

For example, as shown in FIG. 2, the CU assigns a cell group identifier of the DU to the DU, the CU notifies the DU of the cell group identifier CellGroupId, for example, by adding the cell group identifier to a UE context setup/modification request. When the DU feeds back the cell group configuration (for example, a UE context setup/modification response) to the CU, the cell group configuration includes CellGroupId provided by the CU.

It should be further understood that, step S710 is optional, and step S720 may include the cell group identifier of the second network node, for example, a default value is set, or may not include the cell group identifier of the second network node, where the cell group identifier is set by the first network node.

It should be further understood that, when step S720 includes the cell group identifier of the second network node, the cell group identifier set by the second network node is a default value. For example, when the DU feeds back the cell group configuration CellGroupConfig to the CU, CellGroupId is not included, or CellGroupId is set to a default value, for example, 0 or 1. After receiving CellGroupConfig, the CU needs to parse CellGroupConfig and add or modify CellGroupId in CellGroupConfig. It should be understood that the CU may add or modify CellGroupId during implementation.

It should be further understood that the transmission method 700 in this embodiment of this application may be an independent embodiment, or may be combined with another embodiment. For example, the transmission method 700 may be combined with the transmission method 200, the transmission method 300, or the transmission method 500.

According to the transmission method in this embodiment of this application, in a scenario of supporting multi-connectivity data transmission, a problem of how to assign a cell group identifier if there are a plurality of secondary DUs is resolved.

The foregoing describes in detail the transmission methods in the embodiments of this application with reference to FIG. 1 to FIG. 17. The following describes in detail network devices in the embodiments of this application with reference to FIG. 18 to FIG. 28.

FIG. 18 is a schematic block diagram of a network device 800 according to an embodiment of this application. As shown in FIG. 18, the network device 800 includes:
a processing module 810, configured to generate third indication information.

The processing module 810 is configured to control a transceiver module 820 to send the third indication information through a fourth interface, where the third indication information is used to trigger a second network node to assign a downlink tunnel endpoint of a fifth interface and/or a downlink tunnel endpoint of a sixth interface, the fifth interface is an interface between the second network node and a third network node, the sixth interface is an interface between the second network node and a core network node, and the fourth interface, the fifth interface, and the sixth interface are different interfaces.

The transceiver module 820 is further configured to receive an eleventh message from the second network node, where the eleventh message includes the downlink tunnel endpoint of the fifth interface and/or the downlink tunnel endpoint of the sixth interface.

Optionally, the network device 800 includes at least one of a radio resource control protocol layer function, a service data adaptation protocol layer function, and a packet data convergence protocol layer function; and/or
the second network node includes at least one of a packet data convergence protocol layer function, a radio link control protocol layer function, a media access control layer function, and a physical layer function.

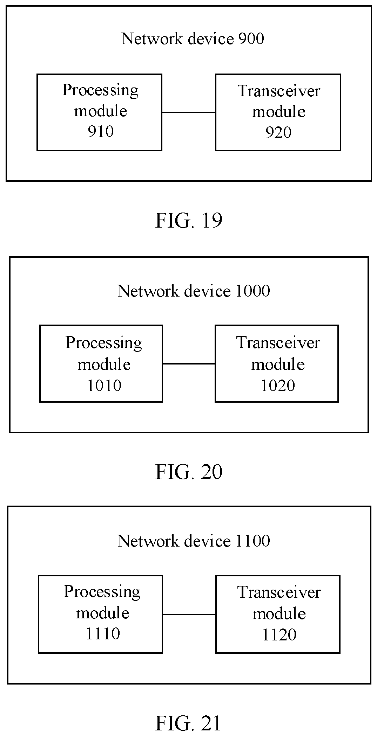

FIG. 19 is a schematic block diagram of a network device 900 according to an embodiment of this application. As shown in FIG. 19, the network device 900 includes:
a processing module 910, configured to control a transceiver module 920 to receive third indication information from a first network node through a fourth interface, where the third indication information is used to instruct to trigger the network device 900 to assign a downlink tunnel endpoint of a fifth interface and/or a downlink tunnel endpoint of a sixth interface, the fifth interface is an interface between the network device 900 and a third network node, the sixth interface is an interface between the network device 900 and a core network node, and the fourth interface, the fifth interface, and the sixth interface are different interfaces.

The processing module 910 is further configured to control the transceiver module 920 to send an eleventh message, where the eleventh message includes the downlink tunnel endpoint of the fifth interface and/or the downlink tunnel endpoint of the sixth interface.

Optionally, the first network node includes at least one of a radio resource control protocol layer function, a service data adaptation protocol layer function, and a packet data convergence protocol layer function; and/or
the network device 900 includes at least one of a packet data convergence protocol layer function, a radio link control protocol layer function, a media access control layer function, and a physical layer function.

FIG. 20 is a schematic block diagram of a network device 1000 according to an embodiment of this application. As shown in FIG. 20, the network device 1000 includes:
a processing module 1010, configured to control a transceiver module 1020 to receive a first message from a user plane node, where the first message includes an uplink tunnel endpoint of a first interface, an uplink tunnel endpoint of a second interface, and a downlink tunnel endpoint of a third interface, the first interface is an interface between the user plane node and a second network node, the second interface is an interface between the user plane node and a third network node, the third interface is an interface between the user plane node and a core network node, and the first interface, the second interface, and the third interface are different interfaces.

The processing module 1010 is further configured to control the transceiver module 1020 to send a second message, where the second message includes the uplink tunnel endpoint of the first interface.

The processing module 1010 is further configured to control the transceiver module 1020 to send a third message, where the third message includes the uplink tunnel endpoint of the second interface and the downlink tunnel endpoint of the third interface.

Optionally, the processing module 1010 is further configured to control the transceiver module 1020 to send first indication information.

The first indication information is used to indicate that a bearer type requested by a control plane node is a secondary-cell split bearer; or
the first indication information is used to trigger the user plane node to assign the uplink tunnel endpoint of the first interface, the uplink tunnel endpoint of the second interface, and the downlink tunnel endpoint of the third interface; or
the first indication information includes at least one of a downlink tunnel endpoint of the first interface, a downlink tunnel endpoint of the second interface, and an uplink tunnel endpoint of the third interface; or
the first indication information is used to indicate at least one of the following: the user plane node is required to have a packet data convergence protocol layer function, the user plane node is required to have a master-cell resource configuration, or the user plane node is required to have a secondary-cell resource configuration.

Optionally, the processing module 1010 is further configured to control the transceiver module 1020 to receive a fourth message from the second network node, where the fourth message includes the downlink tunnel endpoint of the first interface.

The processing module 1010 is further configured to control the transceiver module 1020 to send a fifth message, where the fifth message includes at least one of the downlink tunnel endpoint of the first interface, the downlink tunnel endpoint of the second interface, and the uplink tunnel endpoint of the third interface.

Optionally, the user plane node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

FIG. 21 is a schematic block diagram of a network device 1100 according to an embodiment of this application. As shown in FIG. 21, the network device 1100 includes:
a processing module 1110, for determining an uplink tunnel endpoint of a first interface, an uplink tunnel endpoint of a second interface, and a downlink tunnel endpoint of a third interface, where the first interface is an interface between the network device 1100 and a second network node, the second interface is an interface between the network device 1100 and a third network node, the third interface is an interface between the network device 1100 and a core network node, and the first interface, the second interface, and the third interface are different interfaces.

The processing module 1110 is further configured to control a transceiver module 1120 to send a first message, where the first message includes the uplink tunnel endpoint of the first interface, the uplink tunnel endpoint of the second interface, and the downlink tunnel endpoint of the third interface.

Optionally, the processing module 1110 is further configured to control the transceiver module 1120 to receive first indication information from a control plane node.

The first indication information is used to indicate that a bearer type requested by the control plane node is a secondary-cell split bearer; or
the first indication information is used to instruct the user plane node to assign the uplink tunnel endpoint of the first interface, the uplink tunnel endpoint of the second interface, and the downlink tunnel endpoint of the third interface; or the first indication information includes at least one of a downlink tunnel endpoint of the first interface, a downlink tunnel endpoint of the second interface, and an uplink tunnel endpoint of the third interface; or
the first indication information is used to indicate at least one of the following: the user plane node is required to have a packet data convergence protocol layer function, the user plane node is required to have a master-cell resource configuration, or the user plane node is required to have a secondary-cell resource configuration.

Optionally, the processing module 1110 is further configured to control the transceiver module 1120 to receive a fifth message from the control plane node, where the fifth message includes at least one of the downlink tunnel endpoint of the first interface, the downlink tunnel endpoint of the second interface, and the uplink tunnel endpoint of the third interface.

Optionally, the network device 1100 includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

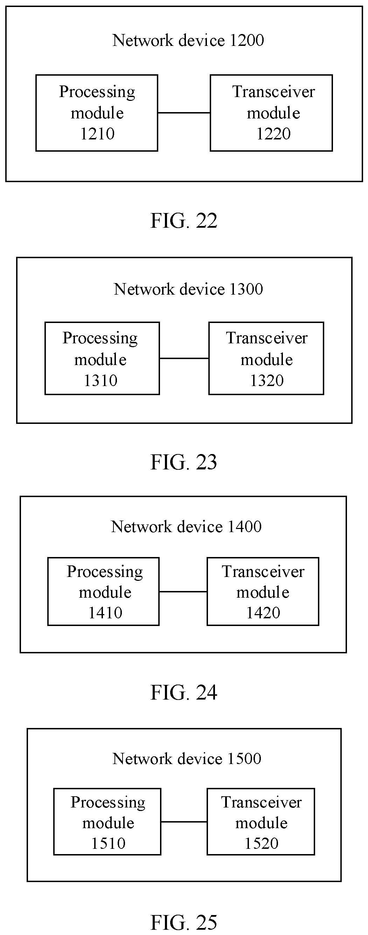

FIG. 22 is a schematic block diagram of a network device 1200 according to an embodiment of this application. As shown in FIG. 22, the network device 1200 includes:
a processing module 1210, configured to control a transceiver module 1220 to receive a third message from a control plane node, where the third message includes an uplink tunnel endpoint of a second interface and a downlink tunnel endpoint of a third interface, the second interface is an interface between a user plane node and the network device 1200, the third interface is an interface between the user plane node and a core network node, and the second interface and the third interface are different interfaces.

The control plane node includes at least one of a radio resource control protocol layer function, a service data adaptation protocol layer function, and a packet data convergence protocol layer function.

Optionally, the processing module 1210 is further configured to control the transceiver module 1220 to send a sixth message to the control plane node, where the sixth message includes a downlink tunnel endpoint of the second interface and an uplink tunnel endpoint of the third interface.

FIG. 23 is a schematic block diagram of a network device 1300 according to an embodiment of this application. As shown in FIG. 23, the network device 1300 includes:
a processing module 1310, configured to control a transceiver module 1320 to receive a seventh message from a second network node, where the seventh message includes data traffic information transmitted by the second network node.

The processing module 1310 is further configured to control the transceiver module 1320 to send an eighth message, where the eighth message includes the data traffic information.

A protocol stack architecture of the network device 1300 is at least one of a radio resource control protocol layer, a service data adaptation protocol layer, and a packet data convergence protocol layer function; and/or
a protocol stack architecture of the second network node is at least one of a radio link control protocol layer, a media access control layer, and a physical layer function.

Optionally, the processing module 1310 is further configured to control the transceiver module 1320 to send second indication information, where the second indication information is used to instruct the second network node to report the data traffic information transmitted by the second network node.

Optionally, the data traffic information transmitted by the second network node includes at least one of uplink data traffic transmitted by the second network node, downlink data traffic transmitted by the second network node, and a statistics collection start time and end time of collecting statistics about data traffic transmitted by the second network node.

FIG. 24 is a schematic block diagram of a network device 1400 according to an embodiment of this application. As shown in FIG. 24, the network device 1400 includes:
a processing module 1410, configured to generate a seventh message.

The processing module 1410 is further configured to control a transceiver module 1420 to send the seventh message, where the seventh message includes data traffic information transmitted by the network device 1400.

A protocol stack architecture of the second network node is at least one of a radio link control protocol layer, a media access control layer, and a physical layer function.

Optionally, the processing module 1410 is further configured to control the transceiver module 1420 to receive second indication information sent by a first network node, where the second indication information is used to instruct the second network node to report the data traffic information transmitted by the second network node.

A protocol stack architecture of the first network node is at least one of a radio resource control protocol layer, a service data adaptation layer, and a packet data convergence protocol layer.

Optionally, the data traffic information transmitted by the second network node includes at least one of uplink data traffic transmitted by the second network node, downlink data traffic transmitted by the second network node, and a statistics collection start time and end time of collecting statistics about data traffic transmitted by the second network node.

FIG. 25 is a schematic block diagram of a network device 1500 according to an embodiment of this application. As shown in FIG. 25, the network device 1500 includes:
a processing module 1510, configured to generate a ninth message.

The processing module 1510 is further configured to control a transceiver module 1520 to send the ninth message, where the ninth message includes a power configuration parameter of the second network node, and the power configuration parameter is maximum transmit power that can be used by a terminal device in a master cell group.

The first network node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

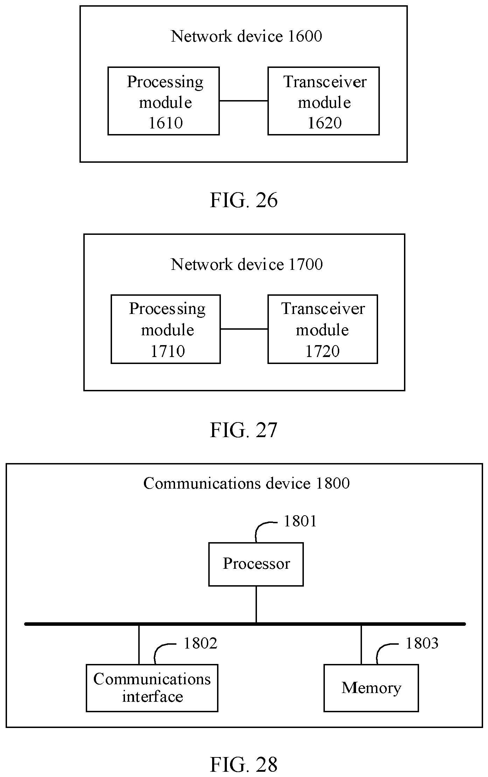

FIG. 26 is a schematic block diagram of a network device 1600 according to an embodiment of this application. As shown in FIG. 26, the network device 1600 includes:
a processing module 1610, configured to generate an eleventh message.

The processing module 1610 is further configured to control a transceiver module 1620 to send the eleventh message, where the eleventh message includes a power configuration parameter of the second network node, and the power configuration parameter is maximum transmit power that can be used by a terminal device in a secondary cell group.

The first network node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

FIG. 27 is a schematic block diagram of a network device 1700 according to an embodiment of this application. As shown in FIG. 27, the network device 1700 includes:
a processing module 1710, configured to generate a twelfth message.

The processing module 1710 is further configured to control a transceiver module 1720 to send the twelfth message, where the twelfth message includes a cell group identifier of a second network node.

The first network node includes at least one of a radio resource control protocol layer function, a service data adaptation protocol layer function, and a packet data convergence protocol layer function; and/or
the second network node includes at least one of a radio link control protocol layer function, a media access control layer function, and a physical layer function.

It may be understood that the operations/various optional designs are numbered sequentially in the foregoing embodiments. However, it may be understood that the sequence numbers are merely for ease of description, and it does not mean that the operations need to be sequentially performed based on the sequence numbers.

It may be understood that, for the first network node, the second network node, the third network node, the user plane node, or the control plane node in the foregoing embodiments, or the CU (for example, the S-eNB-CU, the S-gNB-CU, the M-eNB-CU, or the M-gNB-CU), the DU (for example, the S-eNB-DU, the S-gNB-DU, the M-eNB-DU, or the M-gNB-DU), the MN (for example, the M-eNB or the M-gNB), the CP (for example, the SN-CP, the S-eNB-CP, or the S-gNB-CP), or the UP (for example, the SN-UP, the S-eNB-UP, or the S-gNB-UP) in the foregoing embodiments, their functions in any design in the foregoing embodiments of this application may be separately implemented by executing a program instruction by a hardware platform having a processor and a communications interface. Based on this, as shown in FIG. 28, an embodiment of this application provides a schematic block diagram of a communications device 1800. The communications device 1800 includes:
at least one processor 1801, and optionally includes a communications interface 1802 and a memory 1803, where the communications interface is configured to support communication interaction between the communications device 1800 and another device, the memory 1803 includes a program instruction, and the at least one processor 1801 runs the program instruction, so that a function of any one of the following devices in any design of the foregoing embodiments of this application is implemented: the first network node, the second network node, the third network node, the user plane node, the control plane node, or the CU (for example, the S-eNB-CU, the S-gNB-CU, the M-eNB-CU, or the M-gNB-CU), the DU (for example, the S-eNB-DU, the S-gNB-DU, the M-eNB-DU, or the M-gNB-DU), the MN (for example, the M-eNB or the M-gNB), the CP (for example, the SN-CP, the S-eNB-CP, or the S-gNB-CP), or the UP (for example, the SN-UP, the S-eNB-UP, or the S-gNB-UP) in the foregoing embodiments. In an optional design, the memory 1803 may be configured to store intermediate data generated in a program instruction or program execution process required for implementing functions of the foregoing devices. Optionally, the communications device 1800 may further include an internal interconnection line, to implement communication interaction between the at least one processor 1801, the communications interface 1802, and the memory 1803. The at least one processor 1801 may be implemented by using a dedicated processing chip, a processing circuit, a processor, or a general-purpose chip. For example, processing of all or some PHY functions in the distributed unit DU in the embodiments, or all or some protocol communication functions of the F1 interface or the E1 interface in the embodiments may be implemented by disposing a dedicated circuit/chip in the at least one processor, or may be implemented by executing, by a general processor disposed in the at least one processor 1801, a program instruction related to a PHY function or an F1 interface or E1 interface communication function. For another example, optionally, the at least one processor 1801 may include a communications processing chip, and process all or some of related functions of the MAC layer, the RLC layer, the PDCP layer, the SDAP layer, and the RRC layer of the devices in the embodiments of this application, by executing program instructions of related functions of the MAC layer, the RLC layer, the PDCP layer, the SDAP layer, and the RRC layer. It may be understood that, the methods, the procedures, the operations, or the steps in the designs described in the embodiments of this application can be implemented in a one-to-one correspondence manner by using computer software, electronic hardware, or a combination of computer software and electronic hardware. Whether these functions are performed by using hardware or software depends on specific application and design constraints of the technical solutions. For example, in consideration of high universality, low costs, software and hardware decoupling, and the like, these functions may be implemented by executing a program instruction. For another example, in consideration of system performance, reliability, and the like, these functions may be implemented by using a dedicated circuit. A person of ordinary skill in the art may implement the described functions by using different methods for each particular application. This is not limited herein.

The communications interface 1802 may also be referred to as a transceiver, and usually has a function of exchanging information between two communications peer ends. When the communications peer ends exchange information in a wired form, the communications interface may be designed as an interface circuit or a hardware module including the interface circuit, to support wired communication interaction between the communications peer ends. For example, an interface design in this form may be used for a communication function of an F1 interface between a DU and a CU and an E1 interface between a CP and a UP in this application. When the communications peer ends exchange information in a wireless form, the communications interface may be an interface circuit having a radio frequency sending and receiving function or a hardware system including the interface circuit having a radio frequency sending and receiving function. For example, when wireless communication is performed between a DU and UE, this design may be used for a communications interface between the DU and the UE.

An embodiment of this application further provides a chip system. The chip system may be applied to the foregoing communications device. The chip system includes at least one processor, at least one memory, and an interface circuit. The interface circuit is responsible for information exchange between the chip system and the outside. The at least one memory, the interface circuit, and the at least one processor may be connected to each other by using an internal line. The at least one memory stores an instruction, and the instruction is executed by the at least one processor, to perform operations of the first network node, the second network node, the third network node, the control plane node, or the user plane node in the methods according to the foregoing aspects. An embodiment of this application further provides a communications system, including a network device and/or a terminal device. The network device is the network device according to the foregoing aspects.

An embodiment of this application further provides a computer program product, applied to a network device. The computer program product includes a series of instructions, and when the instructions are run, operations of the first network node, the second network node, and the third network node, the control plane node, or the user plane node in the methods according to the foregoing aspects are performed.

In the embodiments of this application, it should be noted that the method embodiments in the embodiments of this application may be applied to a processor, or implemented by a processor. The processor may be an integrated circuit chip and has a signal processing capability. In an implementation process, steps in the foregoing method embodiments can be implemented by using a hardware integrated logic circuit in the processor, or by using instructions in a form of software. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams that are disclosed in the embodiments of this application. The general-purpose processor may be a microprocessor, or the processor may be any conventional processor or the like. The steps of the methods disclosed with reference to the embodiments of this application may be directly performed and accomplished by a hardware decoding processor, or may be performed and accomplished by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these memories and memories of any other proper types.

## Claims

1. A transmission method, implemented by a control plane node, comprising:
Receiving (S220), a first message from a user plane node, wherein the first message comprises an uplink tunnel endpoint of a first interface, an uplink tunnel endpoint of a second interface, and a downlink tunnel endpoint of a third interface, wherein the tunnel endpoints are assigned by the user plane node, the first interface is an interface between the user plane node and a second network node, the second interface is an interface between the user plane node and a third network node, and the third interface is an interface between the user plane node and a core network node;
sending (S230), a second message to the second network node, wherein the second message comprises the uplink tunnel endpoint of the first interface;
sending (S240), a third message to the third network node, wherein the third message comprises the uplink tunnel endpoint of the second interface and the downlink tunnel endpoint of the third interface;
receiving (S231), a fourth message from the second network node, wherein the fourth message comprises a downlink tunnel endpoint of the first interface assigned by the second network node; and
sending (S232), a fifth message to the user plane node, wherein the fifth message comprises the downlink tunnel endpoint of the first interface;
wherein the downlink tunnel endpoint of the first interface is used for a data transmission of the third network node or the core network node with the second network node, wherein the control plane node and the user plane node belong to a Centralized Unit, CU, of a secondary base station,
wherein the second network node is a Distributed Unit, DU, of the secondary base station,
wherein the third network node is a master base station (MN), and
wherein the core network node belongs to an LTE core network or a New Radio, NR, core network; and wherein:
the control plane node comprises at least one of a radio resource control protocol layer function, a service data adaptation protocol layer function, and a packet data convergence protocol layer function,
the user plane node comprises at least one of a radio resource control protocol layer function, a service data adaptation protocol layer function, and a packet data convergence protocol layer function,
the second network node comprises at least one of a radio link control protocol layer function, a media access control layer function, and a physical layer function,
the third network node comprises at least one of a radio resource control protocol layer, a service data adaptation protocol layer function, a packet data convergence protocol layer function, a radio link control protocol layer function, a media access control layer function, and a physical layer function.

2. The method according to claim 1, wherein the method further comprises:
sending (S202), first indication information to the user plane node, wherein
the first indication information is used to trigger the user plane node to assign the uplink tunnel endpoint of the first interface, the uplink tunnel endpoint of the second interface, and the downlink tunnel endpoint of the third interface.

3. The method according to claim 1 or 2, wherein the fifth message further comprises at least one of: a downlink tunnel endpoint of the second interface, or a uplink tunnel endpoint of the third interface.

4. The method according to any one of claims 1 to 3, wherein the method further comprises:
sending, a data forwarding instruction to the user plane node, wherein the data forwarding instruction is used to instruct the user plane node to assign an uplink data forwarding address and a downlink data forwarding address for data forwarding.

5. The method according to claim 4, wherein the method further comprises:
receiving, the uplink data forwarding address and the downlink data forwarding address from the user plane node.

6. The method according to any one of claims 1 to 3, wherein the method further comprises:
assigning, an uplink data forwarding address and a downlink data forwarding address for data forwarding, and sending the uplink data forwarding address and the downlink data forwarding address to the user plane node

7. The method according to any one of claims 4 to 6, wherein the uplink data forwarding address and the downlink data forwarding address are for a specific bearer, or the uplink data forwarding address and the downlink data forwarding address are for a specific QoS flow.

8. A transmission method, implemented by a user plane node, comprising:
Determining (S210), an uplink tunnel endpoint of a first interface, an uplink tunnel endpoint of a second interface, and a downlink tunnel endpoint of a third interface, wherein the first interface is an interface between the user plane node and a second network node, the second interface is an interface between the user plane node and a third network node, and the third interface is an interface between the user plane node and a core network node; and
Sending (S220), a first message to a control plane node, wherein the first message comprises the uplink tunnel endpoint of the first interface, the uplink tunnel endpoint of the second interface, and the downlink tunnel endpoint of the third interface;
receiving (S232), a fifth message sent by the control plane node, wherein the fifth message comprises the downlink tunnel endpoint of the first interface;
wherein the downlink tunnel endpoint of the first interface is used for a data transmission of the third network node or the core network node with the second network node,
wherein the control plane node and the user plane node belong to a Centralized Unit, CU, of a secondary base station,
wherein the second network node is a Distributed Unit, DU, of the secondary base station,
wherein the third network node is a master base station (MN), and
wherein the core network node belongs to an LTE core network or an New Radio, NR, core network; and wherein:
the control plane node comprises at least one of a radio resource control protocol layer function, a service data adaptation protocol layer function, and a packet data convergence protocol layer function,
the user plane node comprises at least one of a radio resource control protocol layer function, a service data adaptation protocol layer function, and a packet data convergence protocol layer function,
the second network node comprises at least one of a radio link control protocol layer function, a media access control layer function, and a physical layer function,
the third network node comprises at least one of a radio resource control protocol layer, a service data adaptation protocol layer function, a packet data convergence protocol layer function, a radio link control protocol layer function, a media access control layer function, and a physical layer function.

9. The method according to claim 8, wherein the method further comprises:
Receiving (S202), first indication information from the control plane node, wherein the first indication information is used to trigger the user plane node to assign the uplink tunnel endpoint of the first interface, the uplink tunnel endpoint of the second interface, and the downlink tunnel endpoint of the third interface.

10. The method according to claim 8 or 9, wherein the fifth message further comprises at least one of the downlink tunnel endpoint of the second interface, or the uplink tunnel endpoint of the third interface.

11. The method according to any one of claims 8 to 10, wherein the method further comprises:
receiving, a data forwarding instruction from the control plane node, wherein the data forwarding instruction is used to instruct the user plane node to assign an uplink data forwarding address and a downlink data forwarding address for data forwarding.

12. The method according to claim 11, wherein the method further comprises:
sending, the uplink data forwarding address and the downlink data forwarding address to the control plane node.

13. An apparatus applied for a control plane node, wherein the apparatus is configured to perform the method according to any one of claims 1 to 7.

14. An apparatus applied for a user plane node, wherein the apparatus is configured to perform the method according to any one of claims 8 to 12.

15. A computer program product, comprising an instruction, wherein which, when executed by a computer device, cause the computer device to perform the method according to any one of claims 1 to 12.

## Patentansprüche

1. Übertragungsverfahren, das durch einen Steuerebenenknoten implementiert wird, umfassend:
Empfangen (S220) einer ersten Nachricht von einem Benutzerebenenknoten, wobei die erste Nachricht einen Uplink-Tunnel-Endpunkt einer ersten Schnittstelle, einen Uplink-Tunnel-Endpunkt einer zweiten Schnittstelle und einen Downlink-Tunnel-Endpunkt einer dritten Schnittstelle umfasst, wobei die Tunnel-Endpunkte durch den Benutzerebenenknoten zugewiesen werden, die erste Schnittstelle eine Schnittstelle zwischen dem Benutzerebenenknoten und einem zweiten Netzwerkknoten ist, die zweite Schnittstelle eine Schnittstelle zwischen dem Benutzerebenenknoten und einem dritten Netzwerkknoten ist und die dritte Schnittstelle eine Schnittstelle zwischen dem Benutzerebenenknoten und einem Kernnetzwerkknoten ist;
Senden (S230) einer zweiten Nachricht an den zweiten Netzwerkknoten, wobei die zweite Nachricht den Uplink-Tunnel-Endpunkt der ersten Schnittstelle umfasst;
Senden (S240) einer dritten Nachricht an den dritten Netzwerkknoten, wobei die dritte Nachricht den Uplink-Tunnel-Endpunkt der zweiten Schnittstelle und den Downlink-Tunnel-Endpunkt der dritten Schnittstelle umfasst;
Empfangen (S231) einer vierten Nachricht von dem zweiten Netzwerkknoten, wobei die vierte Nachricht einen Downlink-Tunnel-Endpunkt der ersten Schnittstelle, der durch den zweiten Netzwerkknoten zugewiesen wird, umfasst; und
Senden (S232) einer fünften Nachricht an den Benutzerebenenknoten, wobei die fünfte Nachricht den Downlink-Tunnel-Endpunkt der ersten Schnittstelle umfasst;
wobei der Downlink-Tunnel-Endpunkt der ersten Schnittstelle für eine Datenübertragung des dritten Netzwerkknotens oder des Kernnetzwerkknotens mit dem zweiten Netzwerkknoten verwendet wird, wobei der Steuerebenenknoten und der Benutzerebenenknoten zu einer Zentraleinheit, CU, einer sekundären Basisstation gehören,
wobei der zweite Netzwerkknoten eine verteilte Einheit, DU, der sekundären Basisstation ist,
wobei der dritte Netzwerkknoten eine Master-Basisstation (MN) ist und
wobei der Kernnetzknoten zu einem LTE-Kernnetzwerk oder einem New-Radio-Kernnetzwerk, NR-Kernnetzwerk, gehört; und wobei:
der Steuerebenenknoten mindestens eine von einer Funkressourcensteuerprotokollschichtfunktion, einer Dienstdatenanpassungsprotokollschichtfunktion und einer Paketdatenkonvergenzprotokollschichtfunktion umfasst,
der Benutzerebenenknoten mindestens eine von einer Funkressourcensteuerprotokollschichtfunktion, einer Dienstdatenanpassungsprotokollschichtfunktion und einer Paketdatenkonvergenzprotokollschichtfunktion umfasst,
der zweite Netzwerkknoten mindestens eine von einer Funkverbindungssteuerprotokollschichtfunktion, einer Medienzugriffssteuerschichtfunktion und einer Physikalische-Schicht-Funktion umfasst,
der dritte Netzwerkknoten mindestens eine von einer Funkressourcensteuerprotokollschicht, einer Dienstdatenanpassungsprotokollschichtfunktion, einer Paketdatenkonvergenzprotokollschichtfunktion, einer Funkverbindungssteuerprotokollschichtfunktion, einer Medienzugriffssteuerschichtfunktion und einer Physikalische-Schicht-Funktion umfasst.

2. Verfahren nach Anspruch 1, wobei das Verfahren ferner Folgendes umfasst:
Senden (S202) erster Angabeinformationen an den Benutzerebenenknoten, wobei
die ersten Angabeinformationen dazu verwendet werden, auszulösen, dass der Benutzerebenenknoten den Uplink-Tunnel-Endpunkt der ersten Schnittstelle, den Uplink-Tunnel-Endpunkt der zweiten Schnittstelle und den Downlink-Tunnel-Endpunkt der dritten Schnittstelle zuweist.

3. Verfahren nach Anspruch 1 oder 2, wobei die fünfte Nachricht ferner mindestens eines des Folgenden umfasst: einen Downlink-Tunnel-Endpunkt der zweiten Schnittstelle oder einen Uplink-Tunnel-Endpunkt der dritten Schnittstelle.

4. Verfahren nach einem der Ansprüche 1 bis 3, wobei das Verfahren ferner Folgendes umfasst:
Senden einer Datenweiterleitungsanweisung an den Benutzerebenenknoten, wobei die Datenweiterleitungsanweisung verwendet wird, um den Benutzerebenenknoten anzuweisen, eine Uplink-Datenweiterleitungsadresse und eine Downlink-Datenweiterleitungsadresse zum Weiterleiten von Daten zuzuweisen.

5. Verfahren nach Anspruch 4, wobei das Verfahren ferner Folgendes umfasst:
Empfangen der Uplink-Datenweiterleitungsadresse und der Downlink-Datenweiterleitungsadresse von dem Benutzerebenenknoten.

6. Verfahren nach einem der Ansprüche 1 bis 3, wobei das Verfahren ferner Folgendes umfasst:
Zuweisen einer Uplink-Datenweiterleitungsadresse und einer Downlink-Datenweiterleitungsadresse zum Weiterleiten von Daten und Senden der Uplink-Datenweiterleitungsadresse und der Downlink-Datenweiterleitungsadresse an den Benutzerebenenknoten.

7. Verfahren nach einem der Ansprüche 4 bis 6, wobei die Uplink-Datenweiterleitungsadresse und die Downlink-Datenweiterleitungsadresse für einen bestimmten Träger sind oder die Uplink-Datenweiterleitungsadresse und die Downlink-Datenweiterleitungsadresse für einen bestimmten QoS-Fluss sind.

8. Übertragungsverfahren, das durch einen Benutzerebenenknoten implementiert wird, umfassend:
Bestimmen (S210) eines Uplink-Tunnel-Endpunkts einer ersten Schnittstelle, eines Uplink-Tunnel-Endpunkts einer zweiten Schnittstelle und eines Downlink-Tunnel-Endpunkts einer dritten Schnittstelle, wobei die erste Schnittstelle eine Schnittstelle zwischen dem Benutzerebenenknoten und einem zweiten Netzwerkknoten ist, die zweite Schnittstelle eine Schnittstelle zwischen dem Benutzerebenenknoten und einem dritten Netzwerkknoten ist und die dritte Schnittstelle eine Schnittstelle zwischen dem Benutzerebenenknoten und einem Kernnetzwerkknoten ist; und
Senden (S220) einer ersten Nachricht an einen Steuerebenenknoten, wobei die erste Nachricht den Uplink-Tunnel-Endpunkt der ersten Schnittstelle, den Uplink-Tunnel-Endpunkt der zweiten Schnittstelle und den Downlink-Tunnel-Endpunkt der dritten Schnittstelle umfasst;
Empfangen (S232) einer fünften Nachricht, die durch den Steuerebenenknoten gesendet wurde, wobei die fünfte Nachricht den Downlink-Tunnel-Endpunkt der ersten Schnittstelle umfasst;
wobei der Downlink-Tunnel-Endpunkt der ersten Schnittstelle für eine Datenübertragung des dritten Netzwerkknotens oder des Kernnetzwerkknotens mit dem zweiten Netzwerkknoten verwendet wird, wobei der Steuerebenenknoten und der Benutzerebenenknoten zu einer Zentraleinheit, CU, einer sekundären Basisstation gehören,
wobei der zweite Netzwerkknoten eine verteilte Einheit, DU, der sekundären Basisstation ist,
wobei der dritte Netzwerkknoten eine Master-Basisstation (MN) ist und
wobei der Kernnetzknoten zu einem LTE-Kernnetzwerk oder einem New-Radio-Kernnetzwerk, NR-Kernnetzwerk, gehört; und wobei:
der Steuerebenenknoten mindestens eine von einer Funkressourcensteuerprotokollschichtfunktion, einer Dienstdatenanpassungsprotokollschichtfunktion und einer Paketdatenkonvergenzprotokollschichtfunktion umfasst,
der Benutzerebenenknoten mindestens eine von einer Funkressourcensteuerprotokollschichtfunktion, einer Dienstdatenanpassungsprotokollschichtfunktion und einer Paketdatenkonvergenzprotokollschichtfunktion umfasst,
der zweite Netzwerkknoten mindestens eine von einer Funkverbindungssteuerprotokollschichtfunktion, einer Medienzugriffssteuerschichtfunktion und einer Physikalische-Schicht-Funktion umfasst,
der dritte Netzwerkknoten mindestens eine von einer Funkressourcensteuerprotokollschicht, einer Dienstdatenanpassungsprotokollschichtfunktion, einer Paketdatenkonvergenzprotokollschichtfunktion, einer Funkverbindungssteuerprotokollschichtfunktion, einer Medienzugriffssteuerschichtfunktion und einer Physikalische-Schicht-Funktion umfasst.

9. Verfahren nach Anspruch 8, wobei das Verfahren ferner Folgendes umfasst:
Empfangen (S202) erster Angabeinformationen von dem Steuerebenenknoten, wobei
die ersten Angabeinformationen dazu verwendet werden, auszulösen, dass der Benutzerebenenknoten den Uplink-Tunnel-Endpunkt der ersten Schnittstelle, den Uplink-Tunnel-Endpunkt der zweiten Schnittstelle und den Downlink-Tunnel-Endpunkt der dritten Schnittstelle zuweist.

10. Verfahren nach Anspruch 8 oder 9, wobei die fünfte Nachricht ferner mindestens eines des Folgenden umfasst: den Downlink-Tunnel-Endpunkt der zweiten Schnittstelle oder den Uplink-Tunnel-Endpunkt der dritten Schnittstelle.

11. Verfahren nach einem der Ansprüche 8 bis 10, wobei das Verfahren ferner Folgendes umfasst:
Empfangen einer Datenweiterleitungsanweisung von dem Steuerebenenknoten, wobei die Datenweiterleitungsanweisung verwendet wird, um den Benutzerebenenknoten anzuweisen, eine Uplink-Datenweiterleitungsadresse und eine Downlink-Datenweiterleitungsadresse zum Weiterleiten von Daten zuzuweisen.

12. Verfahren nach Anspruch 11, wobei das Verfahren ferner Folgendes umfasst:
Senden der Uplink-Datenweiterleitungsadresse und der Downlink-Datenweiterleitungsadresse an den Steuerebenenknoten.

13. Einrichtung, die für einen Steuerebenenknoten angewendet wird, wobei die Einrichtung dazu konfiguriert ist, das Verfahren nach einem der Ansprüche 1 bis 7 durchzuführen.

14. Einrichtung, die für einen Benutzerebenenknoten angewendet wird, wobei die Einrichtung dazu konfiguriert ist, das Verfahren nach einem der Ansprüche 8 bis 12 durchzuführen.

15. Computerprogrammprodukt, das eine Anweisung umfasst, wobei diese bei Ausführung durch eine Computervorrichtung, die Computervorrichtung dazu veranlasst, das Verfahren nach einem der Ansprüche 1 bis 12 durchzuführen.

## Revendications

1. Procédé de transmission, mis en oeuvre par un noeud de plan de contrôle, comprenant :
la réception (S220) d'un premier message provenant d'un noeud de plan utilisateur, dans lequel le premier message comprend un point d'extrémité de tunnel de liaison montante d'une première interface, un point d'extrémité de tunnel de liaison montante d'une deuxième interface, et un point d'extrémité de tunnel de liaison descendante d'une troisième interface, dans lequel tous les points d'extrémités des tunnels sont attribués par le noeud de plan utilisateur, la première interface est une interface entre le noeud du plan utilisateur et un deuxième noeud de réseau, la deuxième interface est une interface entre le noeud de plan utilisateur et un troisième noeud de réseau, et la troisième interface est une interface entre le noeud de plan utilisateur et un noeud de réseau central ;
l'envoi (S230) d'un deuxième message au deuxième noeud de réseau, dans lequel le deuxième message comprend le point d'extrémité de tunnel de liaison montante de la première interface ;
l'envoi (S240) d'un troisième message au troisième noeud de réseau, dans lequel le troisième message comprend le point d'extrémité de tunnel de liaison montante de la deuxième interface et le point d'extrémité de tunnel de liaison descendante de la troisième interface ;
la réception (S231) d'un quatrième message provenant du deuxième noeud de réseau, dans lequel le quatrième message comprend un point d'extrémité de tunnel de liaison descendante de la première interface attribué par le deuxième noeud de réseau ; et l'envoi (S232) d'un cinquième message au noeud de plan utilisateur, dans lequel le cinquième message comprend le point d'extrémité de tunnel de liaison descendante de la première interface ;
dans lequel le point d'extrémité de tunnel de liaison descendante de la première interface est utilisé pour une transmission de données du troisième noeud de réseau ou du noeud de réseau central avec le deuxième noeud de réseau,
dans lequel le noeud de plan de contrôle et le noeud de plan utilisateur appartiennent à une unité centralisée, CU, d'une station de base secondaire,
dans lequel le deuxième noeud de réseau est une unité distribuée, DU, de la station de base secondaire,
dans lequel le troisième noeud de réseau est une station de base maître (MN), et
dans lequel le noeud de réseau central appartient à un réseau central LTE ou nouvelle radio, NR ; et dans lequel :
le noeud de plan de contrôle comprend au moins un parmi : une fonction de couche de protocole de contrôle de ressources radio, une fonction de couche de protocole d'adaptation de données de service et une fonction de couche de protocole de convergence de données par paquets,
le noeud de plan utilisateur comprend au moins un parmi : une fonction de couche de protocole de contrôle de ressources radio, une fonction de couche de protocole d'adaptation de données de service et une fonction de couche de protocole de convergence de données par paquets,
le deuxième noeud de réseau comprend au moins un parmi : une fonction de couche de protocole de contrôle de liaison radio, une fonction de couche de contrôle d'accès au support et une fonction de couche physique,
le troisième noeud de réseau comprend au moins un parmi : une couche de protocole de contrôle de ressources radio, une fonction de couche de protocole d'adaptation de données de service, une fonction de couche de protocole de convergence de données par paquets, une fonction de couche de protocole de contrôle de liaison radio, une fonction de couche de contrôle d'accès au support et une fonction de couche physique.

2. Procédé selon la revendication 1, dans lequel le procédé comprend en outre :
l'envoi (S202) des premières informations d'indication au noeud de plan utilisateur, dans lequel
les premières informations d'indication sont utilisées pour déclencher l'attribution, par le noeud de plan utilisateur, du point d'extrémité de tunnel de liaison montante de la première interface, du point d'extrémité de tunnel de liaison montante de la deuxième interface et du point d'extrémité de tunnel de liaison descendante de la troisième interface.

3. Procédé selon la revendication 1 ou 2, dans lequel le cinquième message comprend en outre au moins un : d'un point d'extrémité de tunnel de liaison descendante de la deuxième interface, ou d'un point d'extrémité de tunnel de liaison montante de la troisième interface.

4. Procédé selon l'une quelconque des revendications 1 à 3, dans lequel le procédé comprend en outre :
l'envoi d'une instruction de transfert de données au noeud de plan utilisateur, dans lequel l'instruction de transfert de données est utilisée pour demander au noeud de plan utilisateur d'attribuer une adresse de transfert de données de liaison montante et une adresse de transfert de données de liaison descendante pour le transfert de données.

5. Procédé selon la revendication 4, dans lequel le procédé comprend en outre :
la réception de l'adresse de transfert de données de liaison montante et l'adresse de transfert de données de liaison descendante provenant du noeud de plan utilisateur.

6. Procédé selon l'une quelconque des revendications 1 à 3, dans lequel le procédé comprend en outre :
l'attribution d'une adresse de transfert de données de liaison montante et d'une adresse de transfert de données de liaison descendante pour le transfert de données, et l'envoi de l'adresse de transfert de données de liaison montante et de l'adresse de transfert de données de liaison descendante au noeud de plan utilisateur.

7. Procédé selon l'une quelconque des revendications 4 à 6, dans lequel l'adresse de transmission de données en liaison montante et l'adresse de transmission de données en liaison descendante sont destinées à un support spécifique, ou l'adresse de transmission de données en liaison montante et l'adresse de transmission de données en liaison descendante sont destinées à un flux de QoS spécifique.

8. Procédé de transmission, mis en oeuvre par un noeud de plan utilisateur, comprenant :
la détermination (S210) d'un point d'extrémité de tunnel de liaison montante d'une première interface, d'un point d'extrémité de tunnel de liaison montante d'une deuxième interface et d'un point d'extrémité de tunnel de liaison descendante d'une troisième interface, dans lequel la première interface est une interface entre le noeud de plan utilisateur et un deuxième noeud de réseau, la deuxième interface est une interface entre le noeud de plan utilisateur et un troisième noeud de réseau, et la troisième interface est une interface entre le noeud de plan utilisateur et un noeud de réseau central ; et
l'envoi (S220) d'un premier message à un noeud de plan de contrôle, dans lequel le premier message comprend le point d'extrémité de tunnel de liaison montante de la première interface, le point d'extrémité de tunnel de liaison montante de la deuxième interface et le point d'extrémité de tunnel de liaison descendante de la troisième interface ;
la réception (S232) d'un cinquième message par le noeud de plan de contrôle, dans lequel le cinquième message comprend le point d'extrémité de tunnel de liaison descendante de la première interface ;
dans lequel le point d'extrémité de tunnel de liaison descendante de la première interface est utilisé pour une transmission de données du troisième noeud de réseau ou du noeud de réseau central avec le deuxième noeud de réseau,
dans lequel le noeud de plan de contrôle et le noeud de plan utilisateur appartiennent à une unité centralisée, CU, d'une station de base secondaire,
dans lequel le deuxième noeud de réseau est une unité distribuée, DU, de la station de base secondaire,
dans lequel le troisième noeud de réseau est une station de base maître (MN), et
dans lequel le noeud de réseau central appartient à un réseau central LTE ou nouvelle radio, NR ; et dans lequel :
le noeud de plan de contrôle comprend au moins un parmi : une fonction de couche de protocole de contrôle de ressources radio, une fonction de couche de protocole d'adaptation de données de service et une fonction de couche de protocole de convergence de données par paquets,
le noeud de plan utilisateur comprend au moins un parmi : une fonction de couche de protocole de contrôle de ressources radio, une fonction de couche de protocole d'adaptation de données de service et une fonction de couche de protocole de convergence de données par paquets,
le deuxième noeud de réseau comprend au moins un parmi : une fonction de couche de protocole de contrôle de liaison radio, une fonction de couche de contrôle d'accès au support et une fonction de couche physique,
le troisième noeud de réseau comprend au moins parmi : une couche de protocole de contrôle de ressources radio, une fonction de couche de protocole d'adaptation de données de service, une fonction de couche de protocole de convergence de données par paquets, une fonction de couche de protocole de contrôle de liaison radio, une fonction de couche de contrôle d'accès au support et une fonction de couche physique.

9. Procédé selon la revendication 8, dans lequel le procédé comprend en outre :
la réception (S202) de premières informations d'indication provenant du noeud de plan de contrôle, dans laquelle les premières informations d'indication sont utilisées pour déclencher l'attribution, par le noeud de plan utilisateur, du point d'extrémité de tunnel de liaison montante de la première interface, du point d'extrémité de tunnel de liaison montante de la deuxième interface et du point d'extrémité de tunnel de liaison descendante de la troisième interface.

10. Procédé selon la revendication 8 ou 9, dans lequel le cinquième message comprend en outre au moins un parmi : le point d'extrémité de tunnel de liaison descendante de la deuxième interface, ou le point d'extrémité de tunnel de liaison montante de la troisième interface.

11. Procédé selon l'une quelconque des revendications 8 à 10, dans lequel le procédé comprend en outre :
la réception, depuis le noeud de plan de contrôle, d'une instruction de transfert de données, dans lequel l'instruction de transfert de données est utilisée pour demander au noeud de plan utilisateur d'attribuer une adresse de transfert de données de liaison montante et une adresse de transfert de données de liaison descendante pour le transfert de données.

12. Procédé selon la revendication 11, dans lequel le procédé comprend en outre :
l'envoi de l'adresse de transfert de données de liaison montante et l'adresse de transfert de données de liaison descendante au noeud de plan de contrôle.

13. Appareil appliqué à un noeud de plan de contrôle, dans lequel l'appareil est configuré pour exécuter le procédé selon l'une quelconque des revendications 1 à 7.

14. Appareil appliqué à un noeud de plan utilisateur, dans lequel l'appareil est conçu pour exécuter le procédé selon l'une quelconque des revendications 8 à 12.

15. Produit de programme informatique comprenant une instruction qui, lorsqu'elle est exécutée par un ordinateur, amène l'ordinateur à mettre en oeuvre le procédé selon l'une quelconque des revendications 1 à 12.
